# EUROPEAN PATENT APPLICATION

(11) **EP 4 791 013 A1**
(43) Date of publication of application: **12.08.2026**
(21) Application number: 24917416.0
(22) Date of filing: 26.09.2024
(51) Int. Cl.: H04N 21/8545, H04N 21/81, H04N 21/422, G06N 3/0475, H04N 13/172, H04N 13/366, H04N 13/332, G02B 27/01, G06F 3/01

(54) **ELECTRONIC DEVICE AND METHOD FOR PROVIDING THIRD-PERSON PERSPECTIVE CONTENT**

(30) Priority: 12.01.2024 KR 20240005496; 16.02.2024 KR 20240022976
(71) Applicant: Samsung Electronics Co., Ltd., Suwon-si, Gyeonggi-do 16677 (KR)
(72) Inventor: LIM, Kwangyong, Suwon-si Gyeonggi-do 16677 (KR); KIM, Sooryuh, Suwon-si Gyeonggi-do 16677 (KR); SON, Dongil, Suwon-si Gyeonggi-do 16677 (KR); SON, Chaeyeon, Suwon-si Gyeonggi-do 16677 (KR); AHN, Sunggeun, Suwon-si Gyeonggi-do 16677 (KR); CHOI, Bokun, Suwon-si Gyeonggi-do 16677 (KR)
(74) Representative: Gulde & Partner
(86) International application number: PCT/KR2024/014671
(87) International publication number: WO 2025/150657

(57) **Abstract**

An electronic device according to an exemplary embodiment comprises: a processor; a memory; a camera for generating a video; and a sensor for obtaining sensing data related to a user. The electronic device identifies a valid event on the basis of video and/or sensing data, extracts a prompt for generating third-person perspective content corresponding to the event, and inputs the prompt to a generative artificial intelligence model, thereby generating the content.

## Description

### [Technical Field]

The disclosure relates to an electronic device and a method for providing third-person perspective content.

### [Background Art]

The electronic device may include a wearable device used while being worn on a user's body. For example, the wearable device may be an electronic device that provides an augmented reality (AR) service displaying information generated by a computer in conjunction with an external object in the real-world for providing enhanced user experience. For example, the wearable device may include an AR glasses and/or a head-mounted device (HMD). The wearable device may include a camera for photographing a video and a sensor capable of obtaining sensing data related to a user.

The above information is presented as background information only to assist with an understanding of the disclosure. No determination has been made, and no assertion is made, as to whether any of the above might be applicable as prior art with regard to the disclosure.

### [Disclosure]

### [Technical Solution]

Aspects of the disclosure are to address at least the above-mentioned problems and/or disadvantages and to provide at least the advantages described below. Accordingly, an aspect of the disclosure is to provide an electronic device and method for providing third-person perspective content.

Additional aspects will be set forth in part in the description which follows and, in part, will be apparent from the description, or may be learned by practice of the presented embodiments.

In accordance with an aspect of the disclosure, an electronic device is provided. The electronic device may include a processor comprising processing circuitry. The electronic device may include memory storing instructions. The electronic device may include a camera configured to generate a video. The electronic device may include a sensor configured to obtain sensing data related to a user of the electronic device. The electronic device may include a microphone to generate audio. The instructions, when executed by the processor, may cause the electronic device to identify an event based on at least one of the video or the sensing data. The instructions, when executed by the processor, may cause the electronic device to generate a description representing the event. The instructions, when executed by the processor, may cause the electronic device to extract a prompt to generate third-person perspective content corresponding to the event. The instructions, when executed by the processor, may cause the electronic device to obtain the third-person perspective content by inputting the prompt to a generative artificial intelligence model.

In accordance with another aspect of the disclosure, a method performed by an electronic device is provided. The method may include identifying an event based on at least one of a video or sensing data. The method may include generating a description representing the event. The method may include extracting a prompt to generate third-person perspective content corresponding to the event. The method may include obtaining the third-person perspective content by inputting the prompt to a generative artificial intelligence model.

In accordance with another aspect of the disclosure, a wearable device is provided. The wearable device may include a display configured to display visual information. The wearable device may include a camera configured to generate a video. The wearable device may include a sensor configured to obtain sensing data related to a user of the wearable device. The wearable device may include memory storing instructions. The wearable device may include a processor comprising processing circuitry. The instructions, when executed by the processor, may cause the wearable device to obtain the video and the sensing data by switching the camera and the sensor to an active state, based on identifying wearing of the wearable device. The instructions, when executed by the processor, may cause the wearable device to identify a first event, based on the video. The instructions, when executed by the processor, may cause the wearable device to generate a first description representing a video corresponding to a first interval in which the first event was identified. The instructions, when executed by the processor, may cause the wearable device to identify a second event based on the sensing data. The instructions, when executed by the processor, may cause the wearable device to generate a second description representing sensing data corresponding to a second interval in which the second event was identified. The instructions, when executed by the processor, may cause the wearable device to generate a third description representing a third event, based on at least one of the first description or the second description. The instructions, when executed by the processor, may cause the wearable device to extract a prompt for generating third-person perspective content corresponding to the third event, from the third description, based on identifying that the third event corresponds to a valid event. The instructions, when executed by the processor, may cause the wearable device to generate the third-person perspective content by inputting the prompt into a generative artificial intelligence model.

In accordance with another aspect of the disclosure, one or more non-transitory computer-readable storage media storing computer-executable instructions that, when executed by a processor individually or collectively, cause an electronic device to perform operations are provided. The operations include identifying an event based on at least one of a video or sensing data, generating a description representing the event, extracting a prompt to generate third-person perspective content corresponding to the event, and obtaining the third-person perspective content by inputting the prompt to a generative artificial intelligence model.

Other aspects, advantages, and salient features of the disclosure will become apparent to those skilled in the art from the following detailed description, which, taken in conjunction with the annexed drawings, discloses various embodiments of the disclosure.

### [Description of the Drawings]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment;
FIG. 2 is a block diagram illustrating components of an electronic device according to an example embodiment;
FIGS. 3A and 3B are flowcharts illustrating an operation in which an electronic device according to an example embodiment generates third-person perspective content;
FIG. 4 is a flowchart illustrating operations of an electronic device performed by execution of a first application;
FIG. 5 illustrates an exemplary first event;
FIG. 6 illustrates an exemplary second event;
FIG. 7 is a flowchart illustrating operations of an electronic device performed by execution of a second application;
FIG. 8 illustrates an example of third-person perspective content;
FIG. 9A illustrates an exemplary screen representing a user input for displaying a video list through a display;
FIG. 9B illustrates an exemplary screen in which a video list is displayed through a display;
FIG. 9C illustrates an exemplary screen in which first-person perspective content is displayed through a display in a first mode;
FIG. 9D illustrates an exemplary screen in which third-person perspective content is displayed through a display in a second mode;
FIG. 10 is a flowchart illustrating an operation of a first application for obtaining a video or sensing data;
FIG. 11 is a flowchart illustrating an operation of a second application for generating content;
FIG. 12A illustrates a perspective view of a wearable device according to an example embodiment;
FIG. 12B illustrates one or more hardware disposed in a wearable device according to an example embodiment; and
FIGS. 13A and 13B illustrate an appearance of a wearable device according to an example embodiment;

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

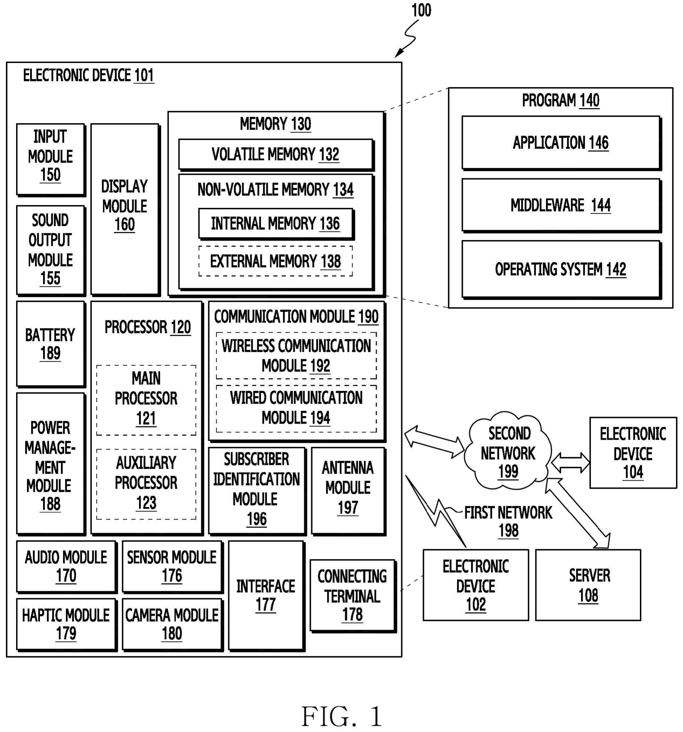

FIG. 1 is a block diagram illustrating an electronic device in a network environment according to an embodiment.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a millimeter wave (mmWave) antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

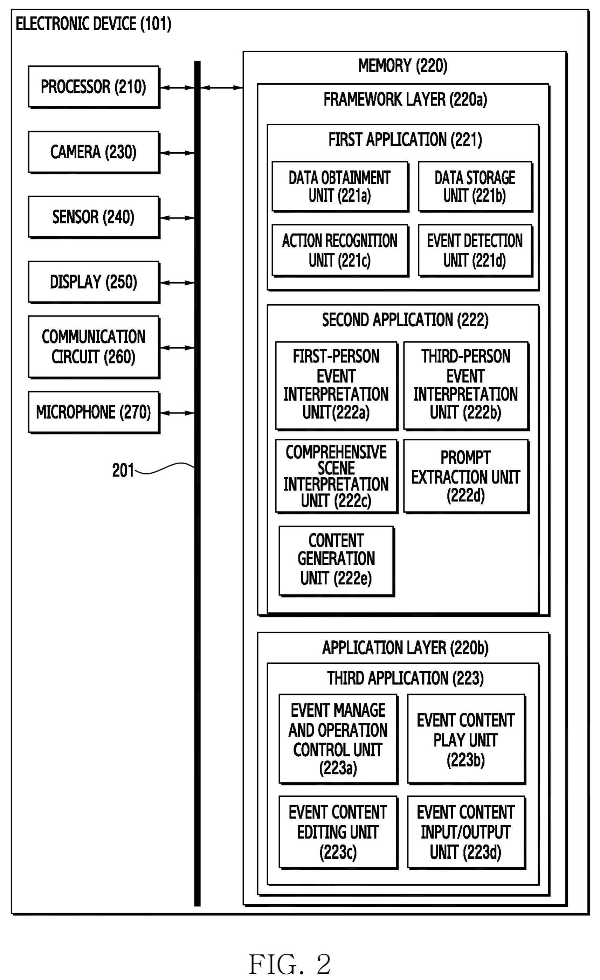

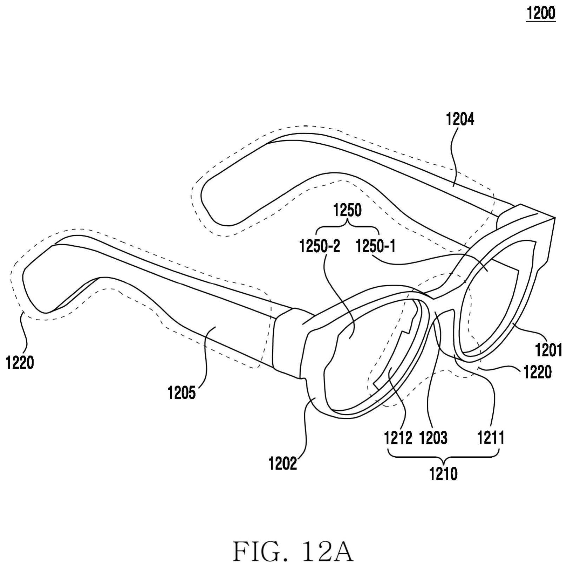

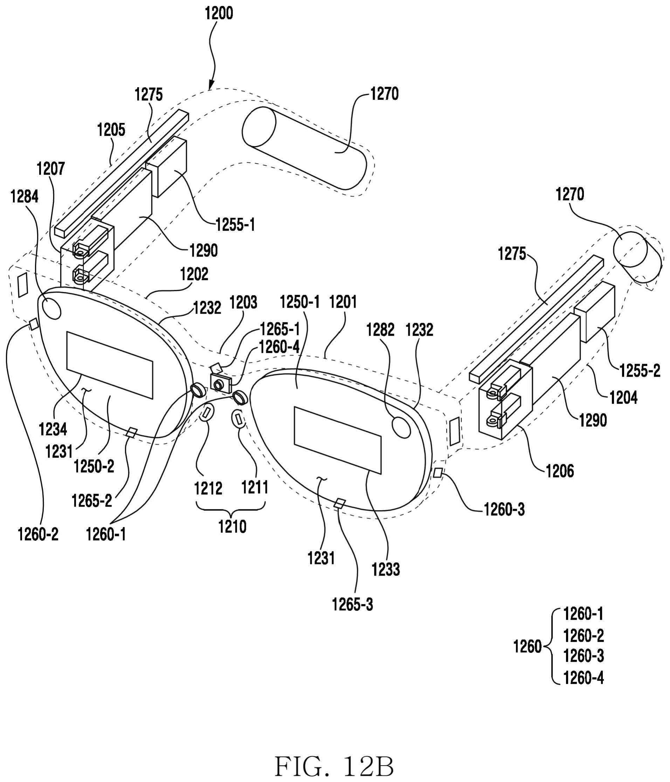

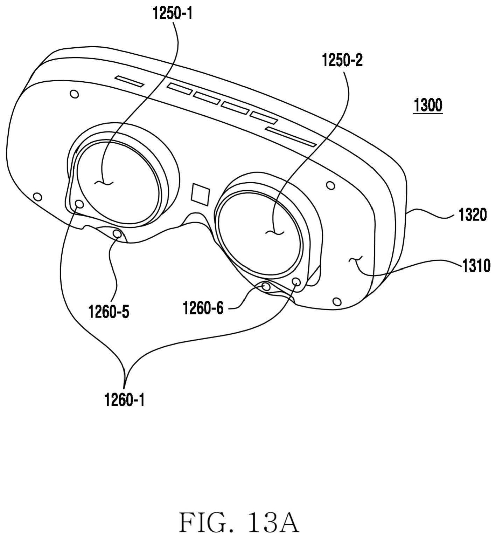

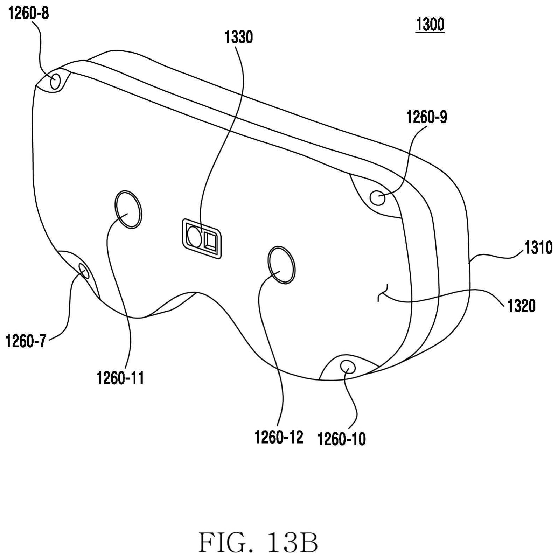

An electronic device 101 according to an example embodiment may include a wearable device. For example, the electronic device 101 may include a head-mounted display (HMD) wearable on a user's head. The electronic device 101 may be referred to as a head-mount display (HMD) device, a headgear electronic device 101, a glasses-type (or goggle-type) electronic device 101, a video see-through (or visible see-through)(VST) device, an extended reality (XR) device, a virtual reality (VR) device, and/or an augmented reality (AR) device. For example, the electronic device 101 may include an accessory (e.g., strap) to be attached to the user's head. An example of a hardware configuration included in the electronic device 101 will be described later with reference to FIG. 2. A wearable device 1200 illustrated in FIGS. 12A and 12B is illustrated as an appearance of a wearable device in the form of glasses, but the embodiment is not limited thereto. An example of a structure of a wearable device wearable on the user's head will be described later with reference to FIGS. 13A and 13B.

The electronic device 101 according to an example embodiment may execute a function related to augmented reality (AR) and/or mixed reality (MR). For example, in a state that a user wears the electronic device 101, the electronic device 101 may include at least one lens disposed adjacent to the user's eyes. The electronic device 101 may combine ambient light passing through the lens with light emitted from a display (e.g., a display 250 of FIG. 2). A display area of the display 250 may be formed within a lens through which ambient light passes. Since the electronic device 101 combines the ambient light and the light emitted from the display 250, the user may see an image in which a real object recognized by the ambient light and a virtual object formed by the light emitted from the display 250 are mixed. The above-described augmented reality, mixed reality, and/or virtual reality may be referred to as extended reality (XR). The electronic device 101 according to an example embodiment may execute a function related to a video see-through (or visible see-through) (VST) and/or virtual reality (VR).

FIG. 2 is a block diagram illustrating components of an electronic device according to an example embodiment.

Referring to FIG. 2, an electronic device 101 according to an example embodiment may include a camera 230 (e.g., the camera module of FIG. 1), a sensor 240 (e.g., the sensor module 176 of FIG. 1), memory 220 (e.g., the memory 130 of FIG. 1), a processor 210 (e.g., the processor 120 of FIG. 1), a communication circuit 260 (e.g., the communication module 190 of FIG. 1), and/or a microphone 270 (e.g., the audio module 170 of FIG. 1). The microphone 270, the camera 230, the sensor 240, the memory 220, the processor 210, and/or the communication circuit 260 may be electronically and/or operably coupled with each other by an electronical component, such as a communication bus 201. A type and/or number of hardware components included in the electronic device 101 is not limited to those shown in FIG. 2. For example, the electronic device 101 may include only a portion of the hardware components shown in FIG. 2 or may include a hardware component (e.g., the battery module of FIG. 1) not shown in FIG. 2.

According to an example embodiment, the processor 210 may control an operation of the electronic device 101. The processor 210 may include a hardware component for processing data based on instructions. For example, the hardware component for processing data may include an arithmetic and logic unit (ALU), a field programmable gate array (FPGA), a central processing unit (CPU), and/or an application processor (AP). In an example embodiment, the electronic device 101 may include one or more processors. The processor 210 may have a structure of a multi-core processor, such as a dual core, a quad core, a hexa core, and/or an octa core. A multi-core processor structure of the processor 210 may include a structure (e.g., a big-little structure) based on a plurality of core circuits, which are divided by power consumption, clock, and/or computational amount per unit time. In an embodiment including a processor having the multi-core processor structure, operations and/or functions of the disclosure may be collectively performed by one or more cores included in the processor 210.

According to an example embodiment, the memory 220 may include a hardware component for storing data and/or instructions inputted to and/or outputted from the processor 210. For example, the memory 220 may include volatile memory, such as random-access memory (RAM) and/or non-volatile memory, such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, hard disk, compact disk, and an embedded multimedia card (eMMC). In an embodiment, the memory 220 may be referred to as storage.

According to an example embodiment, the display 250 may output visual information to the user of the electronic device 101. When the user wears the electronic device 101, the display 250 may be arranged in front of the user's eyes. For example, the display 250 may be controlled by the processor 210 including a circuit, such as a graphic processing unit (GPU) to output visualized information to the user. The display 250 may include a flexible display 250, a flat panel display (FPD) and/or electronic paper. The display 250 may include a liquid crystal display (LCD), a plasma display panel (PDP), and/or one or more light emitting diodes (LEDs). The LED may include an organic LED (OLED). The embodiment is not limited thereto, and for example, when the electronic device 101 includes a lens to transmit external light (or ambient light), the display 250 may include a projector (or projection assembly) for projecting light onto the lens. The display 250 may be referred to as a display panel and/or a display module. When the user wears the electronic device 101, pixels included in the display 250 may be disposed toward any one of the user's two eyes. For example, the display 250 may include display areas (or active areas) corresponding to each of the user's two eyes.

According to an example embodiment, the camera 230 may include one or more optical sensors (e.g., a charged coupled device (CCD) sensor and a complementary metal oxide semiconductor (CMOS) sensor) that generate an electrical signal indicating color and/or brightness of light. The camera 230 may be referred to as an image sensor. A plurality of optical sensors included in the camera 230 may be arranged in a form of a 2-dimensional array. The camera 230 may generate 2D frame data corresponding to light reaching optical sensors of the 2-dimensional array, by obtaining electrical signals of each of the plurality of optical sensors substantially simultaneously. For example, photographic data photographed using the camera 230 may mean a 2D frame data obtained from the camera 230. For example, video data photographed using the camera 230 may mean a sequence of a plurality of 2D frame data obtained from the camera 230 according to a frame rate. The camera 230 may further include a flash light, which is disposed toward a direction in which the camera 230 receives light, for outputting light toward the direction.

For example, the camera 230 may be disposed toward an external environment of the user wearing the electronic device 101. The camera 230 may be disposed in the electronic device 101 toward the external environment, in order to photograph the external environment. The processor 210 may identify one or more objects by using an image and/or a video obtained from the camera 230. For example, the processor 210 may be configured to identify one or more objects positioned in the external environment, based on the image and/or the video obtained from the camera 230.

According to an embodiment, the microphone 270 may be configured to convert a sound wave, which is an analog signal received from the outside of the electronic device 101, into an electrical signal (e.g., an audio signal). For example, the microphone 270 may include a diaphragm configured to generate an electrical signal by vibrating based on the sound wave. For example, the microphone 270 may be implemented as a portion of the camera 230. For example, a video generated by the camera 230 may include audio obtained by the microphone 270 in addition to an image.

According to an example embodiment, the electronic device 101 may include a plurality of cameras arranged in different directions. For example, the electronic device 101 may include a gaze tracking camera. The gaze tracking camera may be disposed toward at least one of two eyes of the user wearing the electronic device 101. The processor 210 may identify a direction of the user's gaze by using an image and/or a video obtained from the gaze tracking camera. The gaze tracking camera 230 may include an infrared (IR) sensor. The gaze tracking camera 230 may be referred to as an eye sensor, a gaze tracker, and/or an eye tracker.

According to an example embodiment, the sensor 240 may generate electronic information capable of being processed and/or stored by the processor 210 from non-electronic information related to the electronic device 101 and/or the user of the electronic device 101. The information may be referred to as sensing data. The sensor 240 may include a global positioning system (GPS) sensor for detecting a geographic location of the electronic device 101, an audio sensor (e.g., a microphone and/or a microphone array including a plurality of microphones), an illuminance sensor, an inertial measurement unit (IMU) (e.g., an acceleration sensor, a gyro sensor and/or a geomagnetic sensor), and/or a time-of-flight (TOF) sensor (or ToF camera). According to an example embodiment, the electronic device 101 may include multimodal sensor.

According to an example embodiment, the communication circuit 260 may include a circuit for supporting transmission and/or reception of an electrical signal between the electronic device 101 and an external electronic device. For example, the communication circuit 260 may include at least one of a MODEM, an antenna, and an optic/electronic (O/E) converter. The communication circuit 260 may support transmission and/or reception of an electrical signal based on various types of protocols, such as Ethernet, local area network (LAN), wide area network (WAN), wireless fidelity (WiFi), Bluetooth, Bluetooth low energy (BLE), ZigBee, long term evolution (LTE), 5G new radio (NR), 6G and/or above-6G. In an embodiment, the communication circuit 260 may be referred to as a communication processor 210 and/or a communication module.

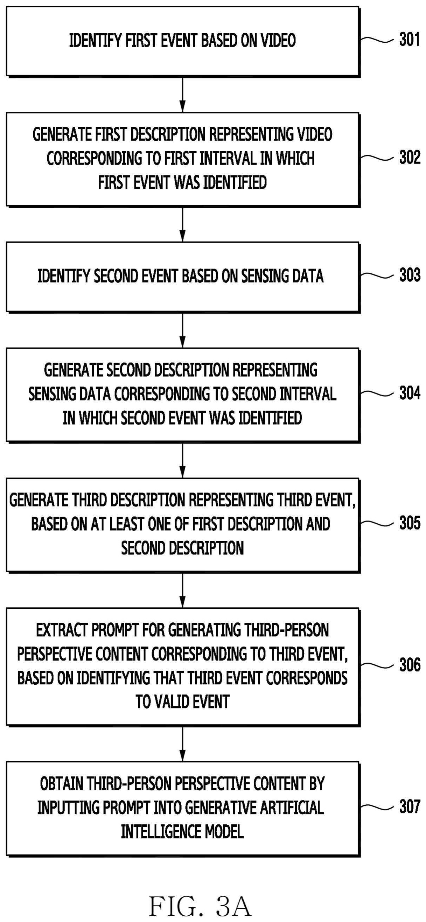

According to an example embodiment, instructions indicating data to be processed by the processor 210, a calculation to be performed, and/or an operation may be stored in the memory 220. A set of instructions may be referred to as a program, a firmware, an operating system, a process, a routine, a sub-routine and/or a software application (hereinafter, application). For example, the electronic device 101 and/or the processor 210 may perform at least one of operations of FIGS. 3A, 3B, 4, and 7 when a set of a plurality of instruction distributed in the form of an operating system, a firmware, a driver, a program, and/or an application is executed. The application being installed in the electronic device 101 may mean that instructions provided in the form of the application are stored in the memory 220, and that the applications are stored in an executable format (e.g., a file having an extension designated by the operating system of the electronic device 101) by the processor 210. For example, an application may include a program and/or a library related to a service provided to a user.

Referring to FIG. 2, programs installed in the electronic device 101 may be included in any one of different layers including a framework layer 220a and an application layer 220b, based on a target. The layers illustrated in FIG. 2 are logically classified (or for convenience of description), and may not mean that an address space of the memory 220 is classified by the layers.

According to an example embodiment, programs (e.g., the first application 221 and/or the second application 222) designed to target at least one of hardware (e.g., the camera 230, the sensor 240, the memory 220, the processor 210, and/or the communication circuit 260) and/or an application layer 220b of the electronic device 101 may be included in the framework layer 220a. The programs included in the framework layer 220a may provide an application programming interface (API) capable of being executed (or invoked or called) based on another program.

According to an example embodiment, the first application 221 may be used to detect an event and an interval in which the event occurred, based on a video and/or sensing data. The first application 221 may be operably connected to the camera 230 and/or the sensor 240. For example, the first application 221 may include a data obtainment unit 221a, a data storage unit 221b, an action recognition unit 221c, and/or an event detection unit 221d. The data obtainment unit 221a may be instructions or code for obtaining a video photographed by the camera 230 and/or sensing data generated by the sensor 240. The data storage unit 221b may be instructions or code for storing a video and/or sensing data. The action recognition unit 221c may be instructions or code for detecting a user's action, based on a video and/or sensing data. The event detection unit 221d may be an instruction or code for detecting occurrence of an event based on a video and/or sensing data. The data obtainment unit 221a, the data storage unit 221b, the action recognition unit 221c, and/or the event detection unit 221d, which are a set of instructions or code, may be instructions/codes resided at least temporarily in the processor 210, or a storage space storing instructions/codes, or may be a portion of circuitry comprising the processor 210.

According to an example embodiment, the second application 222 may be used to generate third-person perspective content based on data generated or processed by the first application 221. In the disclosure, content may include an image and a video. The second application 222 may be operably connected to the first application 221. For example, the second application 222 may include a first-person event interpretation unit 222a, a third-person event interpretation unit 222b, a comprehensive scene interpretation unit 222c, a prompt extraction unit 222d, and/or a content generation unit 222e. The first-person event interpretation unit 222a may be instructions or code for generating a first-person perspective description in which a detected event is interpreted from a first-person perspective. The third-person event interpretation unit 222b may be instructions or code for generating a third-person perspective description in which a detected event is interpreted from a third-person perspective. The comprehensive scene interpretation unit 222c may be instructions or code for generating a description (e.g., a third description) that interprets the event comprehensively. The prompt extraction unit 222d may be instructions or code for extracting (or generating) a prompt capable of generating third-person perspective content by being inputted to a generative artificial intelligence model. The content generation unit 222e may be instructions or code for generating third-person perspective content by inputting a prompt extracted by the prompt extraction unit 222d into the generative artificial intelligence model. The first-person event interpretation unit 222a, the third-person event interpretation unit 222b, the comprehensive scene interpretation unit 222c, the prompt extraction unit 222d, and/or the content generation unit 222e, which are a set of instructions or code, may be instructions/codes resided at least temporarily in the processor 210, or a storage space storing instructions/codes, or may be a portion of circuitry comprising the processor 210.

For example, a program designed to target a user of the electronic device 101 may be included in the application layer 220b. Programs (e.g., a third application 223) included in the application layer 220b may cause execution of a function supported by programs classified as the framework layer 220a by invoking (or calling) an application programming interface (API). For example, in an extended reality (XR) system, the third application 223 may include an event management screen manage and an operation control unit 223a, an event content play unit 223b, an event content editing unit 223c, and/or an event content input/output unit 223d for managing, playing, editing, inputting, and/or outputting content detected as an event. For example, the third application 223 may display one or more visual objects for performing interaction with the user on the display 250, based on execution of XR system UI. A visual object may mean an object deployable within a screen for transmission of information and/or interaction, such as text, an image, an icon, a video, a button, a check box, a text box, a slider, and/or a table. The visual object may be referred to as a visual guide, a virtual object, a visual element, a UI element, a view object, and/or a view element. The wearable device may provide the user with functions available in a virtual space, based on the execution of the XR system UI. In the above description, it is described that the first application 221 and the second application 222 are included in the framework layer 220a, and the third application 223 is included in the application layer 220b, but it is not limited thereto. According to an embodiment, at least one of the first application 221, the second application 222, or the third application 223 may operate in integration with another application. In addition, at least one of the first application 221, the second application 222, or the third application 223 may not be limited to a structure that is divided to the framework layer 220a or the application layer 220b and operates. According to an embodiment, the first application 221 and the second application 222 may be an operation processed by hardware. For example, the first application 221 may be operated by Real-time Processor, and the second application 222 may be operated by Post Processor.

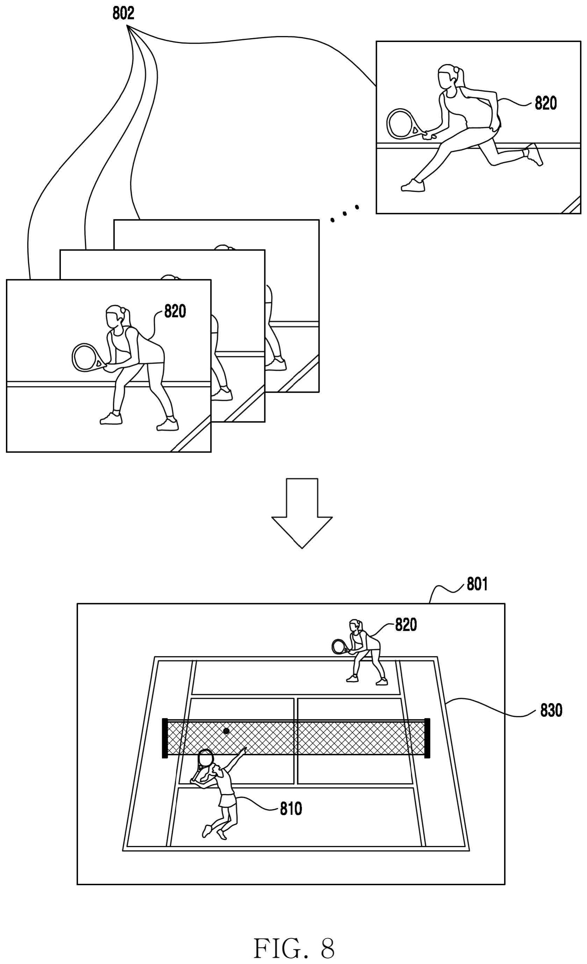

When the electronic device 101 according to an example embodiment is implemented as a wearable device such as an HMD, a video photographed through the camera 230 may include an external environment of the electronic device 101 (or a user of the electronic device 101). Since the camera 230 photographs an external environment to which the user's gaze is directed, the video may include a part (e.g., hand) of the user's body, but may not include overall appearance (e.g., face) of the user. The electronic device 101 according to an example embodiment may be configured to detect an event based on a video and/or sensing data, and provide third-person perspective content representing the detected event. The third-person perspective content may include an avatar (e.g., an avatar 810 of FIG. 8) corresponding to the user of the electronic device 101 in the content. The user's face of the electronic device 101 may be reconstructed using pre-photographed content, or may be obtained using a separate operation of collecting the user's face. Hereinafter, an exemplary operation of the electronic device 101 for providing third-person perspective content will be described.

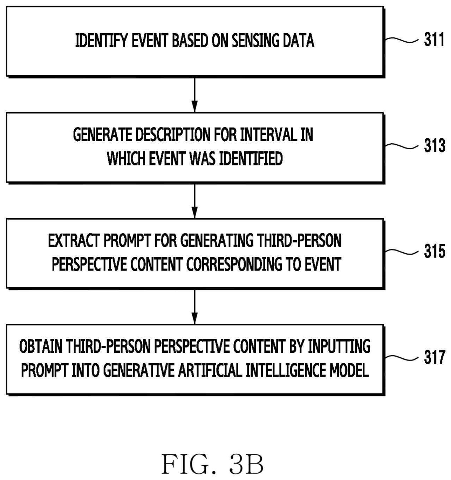

FIGS. 3A and 3B are flowcharts illustrating an operation in which an electronic device according to an example embodiment generates third-person perspective content.

The processor 210 of FIG. 2 may perform operations of an electronic device (e.g., the electronic device 101 of FIG. 2) described with reference to FIGS. 3A and 3B. Instructions stored in memory (e.g., the memory 220 of FIG. 2), when executed by the processor 210, may cause the electronic device 101 to perform operations of the electronic device 101 described in FIG. 3A.

Referring to FIG. 3A, in operation 301, the processor 210 may be configured to identify a first event based on a video photographed by a camera (e.g., the camera 230 of FIG. 2).

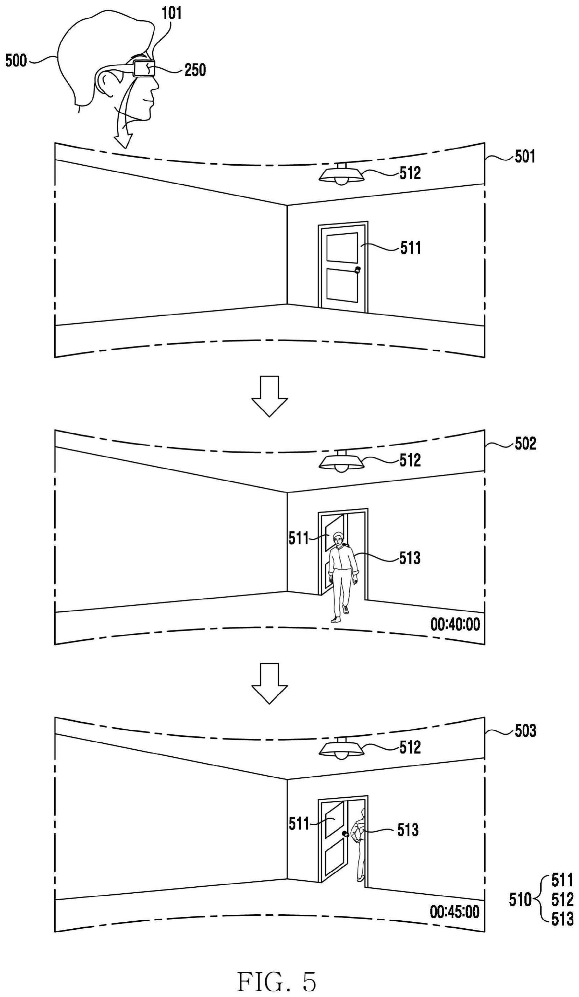

According to an embodiment, the first event may be referred to as an event detected through analysis of the video. According to an example embodiment, the camera 230 may be configured to photograph a video. For example, the camera 230 may be configured to photograph an external environment of the electronic device 101. The camera 230 may be disposed in the electronic device 101 in a direction to which the user's gaze is directed. In a state that the electronic device 101 is worn on the user's head, when a user turns the head to shift a gaze or moves the head, an angle of view of the camera 230 is moved, and thus the view of the video may be changed. According to an embodiment, a photographed video may be stored in the memory 220. The processor 210 may identify the first event based on the video stored in the memory 220. For example, the processor 210 may identify one or more objects in the video and identify the first event based on the one or more objects. An example of the first event will be described later with reference to FIG. 5.

According to an embodiment, a video may include visuals and audio. Since the video includes audio, information on a user utterance received through a microphone (e.g., the input module 150 of FIG. 1) may be included in the video. The processor 210 may identify the first event using the audio (e.g., user utterance) included in the video.

In operation 302, the processor 210 may be configured to generate a first description representing a video corresponding to a first interval in which the first event was identified.

According to an embodiment, the camera 230 may continuously photograph a video while being maintained in an active state. The photographed video may be stored in the memory 220. The camera 230 may generate a video for the entire interval from a timing at which the photographing starts to a timing at which the photographing ends. The video for the entire interval may be stored as a single file, or may be stored as a plurality of files divided into specific time intervals. The processor 210 may generate the first description representing the video corresponding to the first interval in which the first event was identified among the entire intervals. The first description, which is a description of interpreting a video corresponding to the first interval from a first-person perspective and/or a third-person perspective, may include a description from a first-person perspective and/or a third-person perspective. The video corresponding to the first interval may be referred to as a portion of the video corresponding to a first time among the entire interval. For example, when a total time of the video is 100 minutes and the first interval is 30 to 40 minutes within 100 minutes, the video corresponding to the first interval may be referred to as a video having only a time line from 30 to 40 minutes. According to an embodiment, the first interval may be divided on a time basis or may be divided by a frame number.

According to an example embodiment, the processor 210 may generate a first description by analyzing a video corresponding to the first interval. For example, the processor 210 may generate a first description describing a scene of a video by analyzing the video corresponding to the first interval. For example, the processor 210 may generate the first description using an artificial intelligence model. The artificial intelligence model may be configured to detect (e.g., object detection) one or more objects within the video, recognize (e.g., behavior recognition) motion of each of the one or more objects, and/or track (e.g., motion tracking) the motion of each of the one or more objects. However, it is not limited thereto.

In operation 303, the processor 210 may be configured to identify a second event based on sensing data generated by a sensor (e.g., the sensor 240 of FIG. 2).

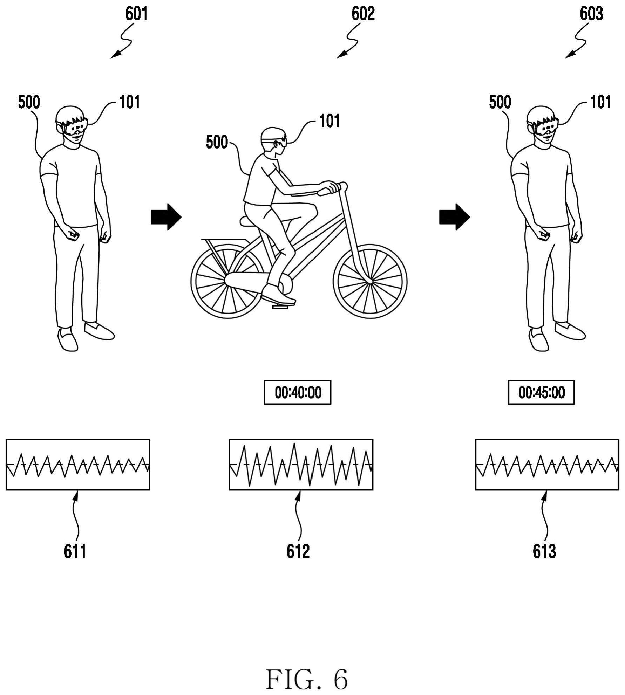

In the disclosure, the second event may be referred to as an event detected through analysis of sensing data. According to an example embodiment, the sensor 240 may be configured to generate sensing data related to a user of the electronic device 101. For example, the sensor 240 may be a multimodal sensor capable of obtaining various information related to the user. For example, the sensor 240 may generate data related to the user's action. The processor 210 may identify a second event by estimating the user's action, based on data related to an action stored in the memory 220. For example, when the multimodal sensor includes an image sensor, a video may be generated through the image sensor. An example of the second event will be described later with reference to FIG. 6.

In operation 304, the processor 210 may be configured to generate a second description representing sensing data corresponding to the second interval in which the second event was identified.

According to an example embodiment, the sensor 240 may continuously generate sensing data while being maintained in an active state. The generated sensing data may be stored in the memory 220. The sensor 240 may generate sensing data for the entire interval from a timing at which the sensor 240 is activated to a timing at which the sensor 240 is inactivated. The processor 210 may generate a second description representing sensing data corresponding to the second interval in which the second event was identified for the entire interval. The second description, which is a description interpreting sensing data corresponding to the second interval from a first-person perspective, may include a description from a first-person perspective. The sensing data corresponding to the second interval may be referred to as a portion of the sensing data corresponding to the second time among the entire interval.

According to an example embodiment, the processor 210 may generate a second description by analyzing the sensing data corresponding to the second interval. For example, the processor 210 may estimate the user's action by analyzing the sensing data corresponding to the second interval, and generate the second description of interpreting the estimated action. For example, the processor 210 may generate the second description using an artificial intelligence model. The artificial intelligence model may estimate the user's motion estimated within the sensing data. However, it is not limited thereto. For example, the processor 210 may generate the second description by comparing the sensing data with reference data corresponding to a specific action of the user.

In operation 305, the processor 210 may be configured to generate a third description representing a third event, based on at least one of the first description and the second description.

In the disclosure, the third event may be referred to as an event identified as an event related to the user, based on at least one of the first event or the second event. According to an example embodiment, the first description and the second description may represent the same event or different events. For example, a case where the first description and the second description represent the same event may be referred to as a case where the processor 210 detects an event from both video and sensing data, such as when the user participates in an athletic event while wearing the electronic device 101. However, it is not limited thereto, and the first event and the second event may be independent of each other. For example, when another person appears in front of the user while the user is sitting still, the first event may be detected by an object corresponding to the other person included in the video, but the second event may not be detected because the user is sitting still. For example, when the user runs on a treadmill, a second event may be detected by the user's running action, but the second event may not be detected because the video represents a substantially identical view.

According to an example embodiment, the processor 210 may be configured to generate a third description representing a third event related to a user, based on at least one of the first description and the second description. Referring to the above-described examples, when the user participates in a tennis match, since both the first event and the second event may be detected, a third description (e.g., "I'm participating in a tennis match") for describing a third event corresponding to participation in the tennis match may be generated based on the first description and the second description. For example, when another person opens the door and appears while the user is sitting still in the room, since the first event may be detected, a third description (e.g., "another person is opening the door and entering the room") for describing a third event corresponding to the appearance of the other person may be generated based on the first description. For example, when the user runs on a treadmill, since the second event may be detected, a third description (e.g., "I'm running on a treadmill") for describing a third event corresponding to the running exercise may be generated based on the second description.

The operations described in FIG. 3A are described in an order of operation 302, operation 303, operation 304, and operation 305, but an operation of the electronic device 101 is not limited to the order. For example, operation 302 and operation 303 may be performed sequentially, operation 304 and operation 305 may be performed sequentially, and operations 302 and 303 and operations 304 and 305 may be performed independently.

In operation 306, the processor 210 may be configured to extract a prompt for generating third-person perspective content corresponding to the third event, based on identifying that the third event corresponds to a valid event.

According to an example embodiment, the processor 210 may be configured to identify whether the third event is a valid event. An invalid event may be referred to as an event that may occur frequently in everyday life even though the first event and/or the second event is detected, such as when the user unintentionally performs a simple action (e.g., stretching). Referring to the above-described examples, the tennis match participation event and the event of running on a treadmill may be a valid event, but the event in which another person enters the room may not be a valid event. The identification of a valid event may be identified based on whether a prestored condition is satisfied, or may be identified through analysis using an artificial intelligence model.

According to an example embodiment, when the third event corresponds to a valid event, the processor 210 may be configured to extract a prompt for generating third-person perspective content corresponding to the third event. According to an example embodiment, the prompt may be referred to as a prompt that enables an output of third-person perspective content when being inputted to a generative artificial intelligence model. In order to extract the prompt, the processor 210 may be configured to generate a third-person perspective description as well as a first-person perspective description when generating a third description representing the third event. For example, the third description may include a third-person perspective description, such as "I'm playing tennis match with A" or "I'm running on a treadmill in B-gym ". According to the third description, the processor 210 may extract a prompt capable of generating third-person perspective content for the third event.

In operation 307, the processor 210 may be configured to obtain third-person perspective content by inputting the prompt into the generative artificial intelligence model.

According to an embodiment, the processor 210 may be configured to obtain content corresponding to the third event by inputting the prompt to the generative artificial intelligence model. The generative artificial intelligence model may generate content from a user input, by using an unstructured deep learning model. When a prompt is inputted into the generative artificial intelligence model, the prompt may be converted into a token through a text encoder, and content may be generated by denoising randomly generated noise based on the token. As a prompt capable of generating third-person perspective content is inputted into the generative artificial intelligence model, third-person perspective content may be generated. The generated third-person perspective content may be stored in the memory 220.

According to an embodiment, the electronic device 101 may provide content using a content (e.g., thumbnails) generated by a generative artificial intelligence model and information (e.g., object information or an image or a user included in a video) obtained by an analyzed video or a sensor. For example, the electronic device 101 may generate a prompt including relevant object information, or control to generate content through a deep learning model by providing a data set available to an artificial intelligence (e.g., a generative AI), so that the generative artificial intelligence model may generate content.

According to an example embodiment, the content may include a thumbnail. For example, a thumbnail is content summarizing and/or representing a video corresponding to a third event, and videos stored in the memory 220 may be displayed as a thumbnail corresponding to each of the videos. The user may intuitively recognize which content is stored through the thumbnail. According to an example embodiment, when the electronic device 101 is implemented as a wearable device, such as an HMD, a video photographed while the user wears the electronic device 101 may not substantially include the user. Since third-person perspective content may be generated by the above-described operations, the electronic device 101 may provide life logging to the user. The user may intuitively recognize an event, through third-person perspective content for an interval in which the event is detected. In the above description, it is described that the content being provided using a generative artificial intelligence model, but is not limited thereto. For example, the electronic device 101 may obtain content using an artificial intelligence model other than the generative artificial intelligence model.

According to an embodiment, the first event and the second event for generating content are described as separate events, but the first event and the second event may be one event. For example, an images and audio may be processed simultaneously through a multimodal sensor. The electronic device 101 may identify an event based on data obtained through the multi-modal sensor.

Referring to FIG. 3B, in operation 311, the processor 210 may be configured to identify an event based on sensing data.

According to an embodiment, an event may be identified based on sensing data obtained through a sensor (e.g., the sensor 240 of FIG. 2). For example, the sensor 240 may include a multimodal sensor. The multimodal sensor may be configured to collect information in a plurality of modes for one object or environment. For example, the sensor 240 may be configured to obtain image data in a visual mode and obtain audio data in auditory mode. The processor 210 may identify an event based on sensing data including an image and audio.

In operation 313, the processor 210 may be configured to generate a description for an interval in which the event was identified.

According to an embodiment, the processor 210 may generate a description for the interval in which the event was identified, by analyzing sensing data. For example, the processor 210 may generate a description using an artificial intelligence model. The artificial intelligence model may analyze an event based on one or more objects or audio included in the sensing data, and generate a description representing the event.

In operation 315, the processor 210 may be configured to extract a prompt for generating third-person perspective content corresponding to the event.

According to an embodiment, the processor 210 may extract a prompt based on the description. For example, according to a description of an event, the processor 210 may extract a prompt for generating the event as third-person perspective content.

In operation 317, the processor 210 may be configured to obtain third-person perspective content by inputting the prompt into the generative artificial intelligence model.

According to an embodiment, the processor 210 may obtain third-person perspective content by inputting the extracted prompt into the generative artificial intelligence model. For example, third-person perspective content may be content in which a user of the electronic device 101 is included in an event analyzed through the description of the event. As described above, third-person perspective content may be generated from one event identified using the sensor 240.

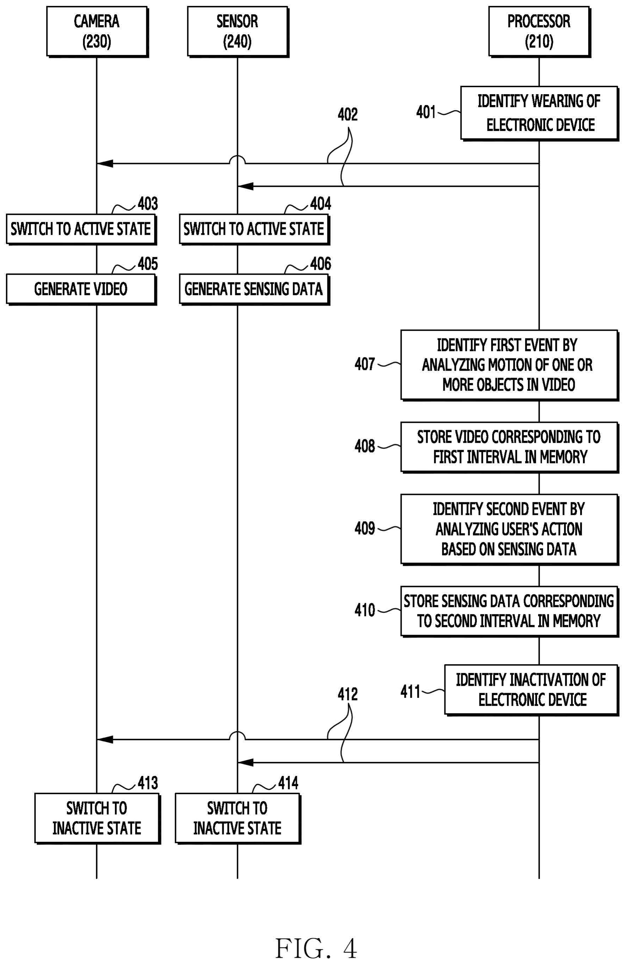

FIG. 4 is a flowchart illustrating operations of an electronic device performed by execution of a first application. FIG. 5 illustrates an exemplary first event. FIG. 6 illustrates an exemplary second event.

The processor 210 of FIG. 2 may perform operations of an electronic device (e.g., the electronic device 101 of FIG. 2) described with reference to FIG. 4. A first application (e.g., the first application 221 of FIG. 2) stored in memory (e.g., the memory 220 of FIG. 2), when executed by the processor 210, may cause the electronic device 101 to perform operations of the electronic device 101 described in FIG. 4.

Referring to FIG. 4, in operation 401, the processor 210 may be configured to identify wearing of the electronic device 101.

According to an example embodiment, the processor 210 may be configured to identify wearing of the electronic device 101 when the electronic device 101 is worn on the user's body. For example, the electronic device 101 may include a sensor for identifying whether the user wears the electronic device 101. The processor 210 may identify wearing of the electronic device 101 based on data indicating wearing, which is provided from the sensor. However, it is not limited thereto. For example, the processor 210 may identify wearing of the electronic device 101, based on a user input. For example, the processor 210 may identify wearing of the electronic device 101, based on receiving a user input causing turn-on of the electronic device 101.

In operation 402, the processor 210 may be configured to switch the camera 230 and the sensor 240 from an inactive state to an active state.

According to an example embodiment, the processor 210 may be configured to activate the camera 230 and the sensor 240, based on identifying wearing of the electronic device 101. For example, the processor 210 may transmit a signal for activating the camera 230 and the sensor 240 to the camera 230 and the sensor 240 based on identifying wearing of the electronic device 101.

In operation 403, the camera 230 may be switched to the active state.

According to an example embodiment, the camera 230 may be switched from the inactive state to the active state, based on receiving the signal from the processor 210.

In operation 404, the sensor 240 may be switched to the active state.

According to an example embodiment, the sensor 240 may be switched from the inactive state to the active state, based on receiving the signal from the processor 210.

In operation 405, the camera 230 may be configured to generate a video.

According to an example embodiment, in the active state, the camera 230 may be configured to generate a video by photographing an external environment in real time. Unless a separate user input is provided, the camera 230 may maintain the active state. The generated video may be stored in the memory 220. The video stored in the memory 220 may be referred to as a video for the entire interval from a timing when the camera 230 is activated to a timing when the camera 230 is inactivated. The camera 230 may generate a video using a microphone sensor. Audio may be included in the video.

In operation 406, the sensor 240 may be configured to generate sensing data.

According to an example embodiment, in the active state, the sensor 240 may be configured to generate sensing data related to the user in real time. Unless a separate user input is provided, the sensor 240 may maintain the active state. The generated sensing data may be stored in the memory 220. The sensing data stored in the memory 220 may be referred to as sensing data for the entire interval from a timing when the sensor 240 is activated to a time when the sensor 240 is inactivated. Logging for the sensing data may be performed after video photographing by the camera 230.

According to an embodiment, a first application (e.g., the first application 221 of FIG. 2) may be executed by a third application (e.g., the third application 223 of FIG. 2). For example, the first application 221 may initialize the sensor 240 of the electronic device 101 and control initiation of a sensing operation of the sensor 240. The first application 221 may receive a frame of a video photographed through the camera 230, and store a buffer in a database in memory (e.g., the memory 220 of FIG. 2).

In operation 407, the processor 210 may be configured to identify the first event by analyzing motion of one or more objects in the video.

In the following description, operation 407, operation 408, operation 409, and operation 410 are sequentially described, but it is only for convenience of description, and an operation of the electronic device 101 is not limited to the order. For example, operations 407 and 408 may be performed sequentially, operations 409 and 410 may be performed sequentially, and operations 407 and 409 may be performed independently. As described with reference to FIG. 3B, the event may be a single event based on sensing data obtained through a multimodal sensor. For example, the single event may be an event identified based on sensing data including an image and audio.

According to an example embodiment, the processor 210 may identify a first event based on a video photographed by the camera 230. For example, the processor 210 may identify one or more objects in the video and identify the first event based on the one or more objects.

Referring to FIG. 5, a first frame 501, a second frame 502, and a third frame 503 of FIG. 5 may be referred to as a video photographed by the camera 230. According to an example embodiment, the camera 230 may be configured to photograph an external environment of the electronic device 101. The camera 230 may be disposed in the electronic device 101 in a direction to which a gaze of a user 500 is directed. In a state that the electronic device 101 is worn on the user 500's head, when the user 500 turns the head to shift a gaze or moves the head, an angle of view of the camera 230 is moved, and thus view of the video may be changed.

According to an example embodiment, the first frame 501, the second frame 502, and the third frame 503 represent a frame corresponding to a specific interval of a video generated by the camera 230. For example, the first frame 501, the second frame 502, and the third frame 503 may be a video photographed while the user 500 is sitting while wearing the electronic device 101 in a room. Each of the first frame 501, the second frame 502, and the third frame 503 may be a frame for different times in the video. Referring to the first frame 501, objects 510, such as a door 511 and a light 512 in a room may be included in the first frame 501. The processor 210 may detect one or more objects 510 and a motion of each of the objects 510 by using an artificial intelligence model capable of analyzing a video. When an event in which another person 513 opens the door 511 and enters the room occurs while the camera 230 is photographing the room, a video may include the second frame 502. For example, when the other person 513 opens the door 511 and enters the room, a situation in which the door 511 is opened and a situation in which the other person 513 enters may be photographed, such as the second frame 502. The processor 210 may identify the occurrence of the first event by detecting an operation in which the door 511 is opened, an operation in which the other person 513 enters the room, an operation taken by the other person 513 in the room, and the like.

For example, when the other person 513 exits the room again, the video may include the third frame 503. The processor 210 may identify the end of the first event by detecting an operation in which the other person 513 leaves in the third frame 503. The processor 210 may identify a first interval in which the first event occurred. For example, time information corresponding to a timing at which the first event occurred (e.g., a timing at which the other person 513 opens the door 511 and enters the room) may be 00:40:00, and time information corresponding to a timing at which the first event ended (e.g., a timing at which the other person 513 leaves the room) may be 00:45:00. In this case, the processor 210 may identify a time interval between 00:40:00 and 00:45:00 as the first interval.

Referring back to FIG. 4, in operation 408, the processor 210 may be configured to store a video corresponding to the first interval in the memory 220.

According to an example embodiment, the processor 210 may be configured to store a video corresponding to the first interval in which the first event was identified in the memory 220. For example, among the entire interval, a video corresponding to the first interval (e.g., a time interval between 00:40:00 and 00:45:00) in which the first event was identified may be stored in the memory 220. The video corresponding to the first interval may be referred to as a portion corresponding to the first interval among a video for the entire interval. The video corresponding to the first interval may be stored in a separate storage space distinguished from a storage space in which the video for the entire interval is stored. For example, a video generated through the camera 230 may be stored in a video database in the memory 220. In the video, the video corresponding to the first interval may be stored in an event database in the memory 220. In the above description, it is described that the first interval represents a specific time interval of the video, but it is not limited thereto. For example, information on the first interval may include time information or frame information on a frame of each video.

In operation 409, the processor 210 may be configured to identify a second event by analyzing the user's action based on sensing data.

FIG. 6 illustrates an exemplary second event.

Referring to FIG. 6, according to an example embodiment, a processor (e.g., the processor 210 of FIG. 2) may identify a second event based on sensing data related to the user 500, which is generated by a sensor (e.g., the sensor 240 of FIG. 2). For example, the processor 210 may estimate the user 500's action based on sensing data 611, 612, and 613, and identify the second event based on the estimated user 500's action.

A first state 601, a second state 602, and a third state 603 of FIG. 6 may be referred to as actions of the user 500. According to an example embodiment, a sensor (e.g., the sensor 240 of FIG. 2) may be configured to generate data 611, 612, and 613 related to the user 500. According to an example embodiment, the sensor 240 may include one or more sensors for obtaining data 611, 612, and 613 related to the user 500. For example, the sensor 240 may include at least one of a sensor for tracking a gaze of the user 500, a sensor for obtaining data related to biometric information of the user 500, a sensor for obtaining data related to audio, or a sensor for obtaining data related to motion of the user 500. However, it is not limited thereto. The biometric information of the user 500 may include information indicating a physical state and/or a psychological state of the user 500, such as a body temperature of the user 500, an electrocardiogram, an electroencephalogram, and a skin electrical resistance. The data related to audio may include voice data of the user 500 and/or audio data obtained in the external environment. The sensor for obtaining data related to motion of the user 500 may include a gyro sensor, an acceleration sensor, and/or a geomagnetic sensor for identifying a posture of the electronic device 101. The sensor for obtaining data related to motion of the user 500 may identify a 6 degrees of freedom pose of the electronic device 101. In addition to these, various other embodiments are possible.

For example, the first state 601 may be referred to as a state in which the user 500 is not performing a separate action. The second state 602 may be referred to as a state in which the user 500 is riding a bicycle. The third state 603 may be referred to as a state in which the user 500 has terminated riding a bicycle. Referring to the first state 601, the sensing data 611 may represent general data while the user 500 does not perform a separate action. The general data may be referred to as data that is usually measured. For example, in the first state 601, data related to motion of the user 500 may represent data corresponding to a state in which the user 500 does not perform a special action. Referring to the second state 602, the sensing data 612 may represent data corresponding to an action of the user 500, while the user 500 rides a bicycle. According to an embodiment, the sensing data 611 may be data indicating speed information, motion information, and/or location information of the user 500 using a geomagnetic sensor. Alternatively, the sensing data 611 may be data indicating biometric information (e.g., heart rate, body temperature) of the user 500 using a bio sensor. When the sensing data 611 indicates data greater than or equal to a threshold value, or when a change in the data converges to a specific pattern, the electronic device 101 may identify the change and identify a specific operation (e.g., riding a bicycle, running, and the like) of the user 500. The electronic device 101 may identify occurrence of the second event based on identifying the specific operation. Comparing the data 611 and the data 612, the sensing data 612 obtained in the second state 620 may represent a sudden change than the sensing data 611 obtained in the first state 610. For example, in the second state 602, data related to motion of the user 500 may represent data corresponding to riding a bicycle. The processor 210 may identify the occurrence of the second event by detecting the sensing data 611 corresponding to riding a bicycle.

Referring to the third state 603, when the user 500 ends riding a bicycle, the sensing data 613 may represent general data again. The processor 210 may identify the end of the second event by detecting the sensing data changed to general data. The processor 210 may identify the second interval in which the second event occurred. For example, time information corresponding to a timing at which the second event occurred (e.g., a timing at which riding a bicycle started) may be 00:40:00, and time information corresponding to a timing at which the second event ended (e.g., a timing at which riding a bicycle ended) may be 00:45:00. In this case, the processor 210 may identify a time interval between 00:40:00 and 00:45:00 as the second interval.

Referring back to FIG. 4, in operation 410, the processor 210 may be configured to store sensing data corresponding to the second interval in the memory 220.

According to an example embodiment, the processor 210 may be configured to store sensing data corresponding to the second interval in which the second event was identified in the memory 220. For example, sensing data corresponding to the second interval (e.g., a time interval between 00:40:00 and 00:45:00) in which the second event was identified among the entire interval may be stored in the memory 220. The sensing data corresponding to the second interval may be referred to as a portion corresponding to the second interval among sensing data for the entire interval. The sensing data corresponding to the second interval may be stored in a separate storage space distinguished from a storage space in which the sensing data for the entire interval is stored.

Operations 404 to 410 described above may be continuously performed in real time within a state that the electronic device 101 is worn. Operation 405 may be performed independently of operation 406, and operations 407 and 408 may be performed independently of operations 409 and 410. As described above, the first event identified by analyzing the video and the second event identified by analyzing the sensing data may be independent.

In operation 411, the processor 210 may be configured to identify inactivation of the electronic device 101. For example, when the user takes off the electronic device 101 or turns off the electronic device 101, the electronic device 101 may be inactivated. For example, the processor 210 may identify inactivation of the electronic device 101, based on identifying that the electronic device 101 is separated from the user's body through a sensor for identifying whether the electronic device 101 is worn by the user, or receiving a user input causing the electronic device 101 to be turned off.

In operation 412, the processor 210 may be configured to switch the camera 230 and the sensor 240 from an active state to an inactive state.

According to an example embodiment, the processor 210 may be configured to inactivate the camera 230 and the sensor 240, based on identifying inactivation of the electronic device 101. For example, the processor 210 may transmit a signal for inactivating the camera 230 and the sensor 240 to the camera 230 and the sensor 240, based on identifying the separation of the electronic device 101.

In operation 413, the camera 230 may be switched to the inactive state.

According to an example embodiment, the camera 230 may be switched from the active state to the inactive state, based on receiving the signal from the processor 210.

In operation 414, the sensor 240 may be switched to the inactive state.

According to an example embodiment, the sensor 240 may switched from the active state to the inactive state based on receiving the signal from the processor 210.

The operations described in FIG. 4 may be operations performed by execution of the first application 221. The first application 221 may store a video and sensing data, and may include instructions or code for identifying the first event and/or the second event based on the video and/or sensing data. A video corresponding to the first interval and/or sensing data corresponding to the second interval, which are stored in the memory 220, may be used to identify a third event, which is a valid event, and to obtain third-person perspective content. Hereinafter, operations in which content is generated by execution of a second application (e.g., the second application 222 of FIG. 2) will be described.

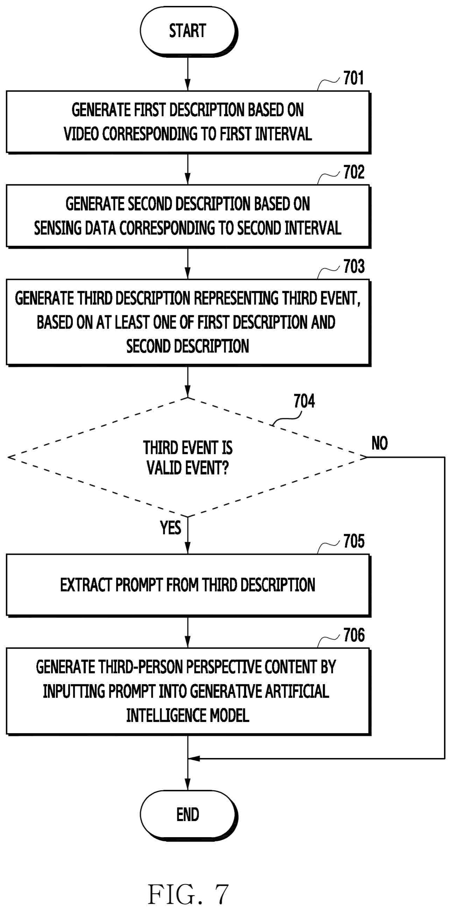

FIG. 7 is a flowchart illustrating operations of an electronic device performed by execution of a second application. FIG. 8 illustrates an example of third-person perspective content.

The processor 210 of FIG. 2 may perform operations of an electronic device (e.g., the electronic device 101 of FIG. 2) described with reference to FIG. 7. A second application (e.g., the second application 222 of FIG. 2) stored in memory (e.g., the memory 220 of FIG. 2), when executed by the processor 210, may cause the electronic device 101 to perform operations of the electronic device 101 described in FIG. 7.

Referring to FIG. 7, in operation 701, the processor 210 may be configured to generate a first description based on a video corresponding to a first interval.

According to an example embodiment, the processor 210 may obtain a video corresponding to the first interval stored in operation 408 of FIG. 4, in order to generate third-person perspective content. The processor 210 may generate a first description representing a video corresponding to the first interval, by analyzing the video corresponding to the first interval. The processor 210 may generate the first description by analyzing one or more objects in the video. The first description may include a first-person perspective description and a third-person perspective description. For example, a first-person event interpretation unit (e.g., the first-person event interpretation unit 222a of FIG. 2) of a second application (e.g., the second application 222 of FIG. 2) may perform an interpretation for a first-person event by analyzing data. The first-person event interpretation unit 222a may generate a first description of the first-person perspective for the event. For example, a third-person event interpretation unit (e.g., the third-person event interpretation unit 222b of FIG. 2) of the second application 222 may interpret the first-person event from a third-person perspective, and generate a first description of a third-person perspective for the event. For example, the comprehensive scene interpretation unit 222c of the second application 222 may generate a first description that comprehensively represents the event. For example, when a user participates in a tennis match while wearing the electronic device 101, the video may include an opponent player of the tennis match. In this case, the processor 210 may generate a first description, including a first-person perspective description, such as "I'm playing tennis match with A (opponent player)" and a third-person description, such as "A is playing tennis match with me". Operation 701 may be substantially identical to operation 302 of FIG. 3A. The descriptions of operation 302 may be applied substantially identically to operation 701.

In operation 702, the processor 210 may be configured to generate a second description based on sensing data corresponding to a second interval.

According to an example embodiment, the processor 210 may obtain sensing data corresponding to the second interval stored in operation 410 of FIG. 4, in order to generate third-person perspective content. The processor 210 may generate a second description representing sensing data corresponding to a second interval, by analyzing the sensing data corresponding to the second interval. The second description may include a description of a first-person perspective. For example, when a user participates in a tennis match while wearing the electronic device 101, the sensing data may include data related to the user's biometric information, data related to audio generated during the tennis match, and/or data related to the user's motion. The processor 210 may estimate an action of the user participating in the tennis match based on the data, and generate the second description based on the estimated action. For example, the processor 210 may generate a second description, including a description of a first-person perspective, such as "I'm participating in a tennis match". Operation 702 may be substantially identical to operation 304 of FIG. 3A. The descriptions of operation 304 may be applied substantially identically to operation 702.

In operation 703, the processor 210 may be configured to generate a third description representing a third event, based on at least one of the first description and the second description.

According to an example embodiment, the processor 210 may generate a third description that synthesizes and interprets the first description and the second description. For example, since a tennis match event may generate both a first event and a second event, a first description and a second description for the tennis match may be generated. Since the third event is determined based on at least one of the first event and the second event, in this case, the third event may be determined as a tennis match based on both the first event and the second event. The processor 210 may generate a third description, such as "I'm playing tennis match with A" based on the first description and the second description. Operation 703 may be substantially identical to operation 305 of FIG. 3A. The descriptions for operation 305 may be applied substantially identically to operation 703.

Referring to the above-described example, the tennis match event may be an event that generates both the first event and the second event. For example, when a user participates in the tennis match while wearing the electronic device 101, a video and sensing data may represent the tennis match event. Unlike the above-described example, occurrence of the third event may be determined based on only the first event or may be determined based on only the second event. In this case, the third description may be generated based on the first description or may be generated based on the second description. For example, when the user watches a picture while sitting in a quiet room, the processor 210 may identify occurrence of the first event by analyzing the picture included in a video. The processor 210 may generate a first description, such as "I'm looking at a picture" based on a video corresponding to a first interval in which the first event occurred. Since sensing data may not be obtained in a case of a picture watching event, the second event may not be identified. Based on the first description, the processor 210 may generate a third description, such as "I'm looking at a picture" representing a third event, which is a picture watching event.

In operation 704, the processor 210 may be configured to identify whether the third event is a valid event.

According to an example embodiment, the processor 210 may identify whether the third event is a valid event in order to generate third-person perspective content for a valid event for the user, and determine whether to extract a third-person perspective prompt based on the identification result. For example, when the second event is identified by the user simply stretching, a third description representing a stretching event may be generated based on the second description. Since the stretching event is an event that may occur frequently in everyday life, the processor 210 may determine that the third event is an invalid event. When the third event is identified as a valid event, operation 705 may be performed. When the third event is identified as an invalid event, it is determined whether there is a video or sensing data to be analyzed, and when there is no video or sensing data to be analyzed, the operation may be terminated.

According to an embodiment, operation 704 may be selectively performed. For example, the electronic device 101 may be configured to obtain third-person perspective content corresponding to the third event, by performing operation 705 without determining whether the third event is a valid event. For example, in case that the electronic device 101 always provides third-person content for the third event, the electronic device 101 may provide third-person perspective content corresponding to the third event without determining whether the third event is a valid event. In this case, the electronic device 101 may be configured to provide third-person content for all third events.

In operation 705, the processor 210 may be configured to extract a prompt from the third description.

Operation 705 may be substantially identical to operation 306 of FIG. 3A. The descriptions for operation 306 may be applied substantially identically to operation 705. For example, the processor 210 may extract a prompt for generating third-person perspective content in which the user and A play a tennis match, from the third description, such as "I'm playing a tennis match with A".

In operation 706, the processor 210 may generate third-person perspective content by inputting the prompt to a generative artificial intelligence model.

Operation 706 may be substantially identical to operation 307 of FIG. 3A. The descriptions of operation 307 may be applied substantially identically to operation 706.

Referring to FIG. 8, third-person perspective content 801 in which a user of the electronic device 101 not included in video frames 802 appears may be provided. The video frames 802 of FIG. 8 represent a plurality of frames configuring a video. Since a video photographed through a camera (e.g., the camera 230 of FIG. 2) is a video of a first-person perspective, the video frames 802 may include only an object 820 corresponding to an opponent player. The video frames 802 may include a part (e.g., hand) of the user's body included within an angle of view of the camera 230, but may not include the user's overall appearance. In a case of the third-person perspective content 801, an object 820 corresponding to the opponent player and an avatar 810 corresponding to the user may be included, and an external environment (e.g., a tennis court 830) may be included. The electronic device 101 according to an example embodiment may provide life logging by providing the third-person perspective content 801. The electronic device 101 may provide enhanced user experience by providing third-person perspective content.

According to an example embodiment, the avatar 810 included in the third-person perspective content may be preset. For example, the user may input a setting related to the avatar 810 to be included in the third-person perspective content in advance. When third-person perspective content is outputted through a generative artificial intelligence model, the content may include an avatar 810 determined based on a preset user setting. However, it is not limited thereto. According to an example embodiment, the avatar 810 may be preset based on a plurality of contents stored in the memory 220. For example, images with the user as a subject may include the avatar 810 corresponding to the user. When the images are inputted to the artificial intelligence model, objects corresponding to the user included in the images are combined, so that the avatar 810 corresponding to the user may be preset. Alternatively, the avatar 810 corresponding to the user included in the third-person content is implemented as a basic avatar according to a system setting of the electronic device 101 and may be modified through post-processing. In addition, embodiments of generating the avatar 810 corresponding to the user may be various.

According to an embodiment, the electronic device 101 may be configured to generate a third-person perspective thumbnail or generate third-person perspective content, by using first-person perspective content received from an external electronic device. For example, the electronic device 101 may be configured to analyze the first-person perspective content received from the external electronic device and generate third-person perspective content. The avatar 810 corresponding to a user may be included in the third-person perspective content.

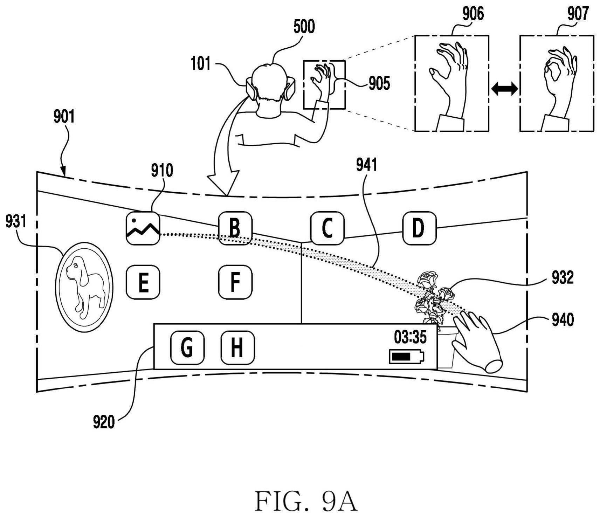

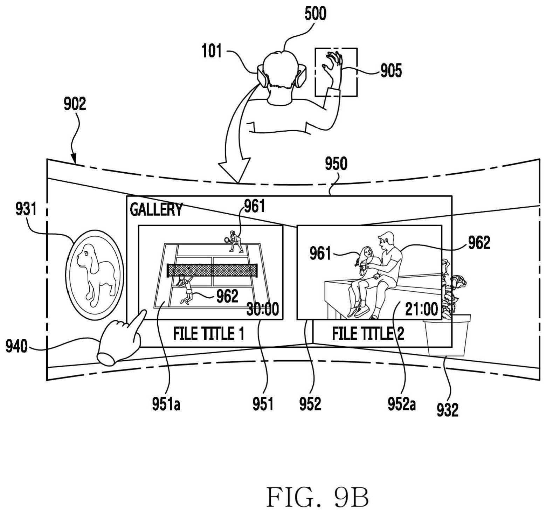

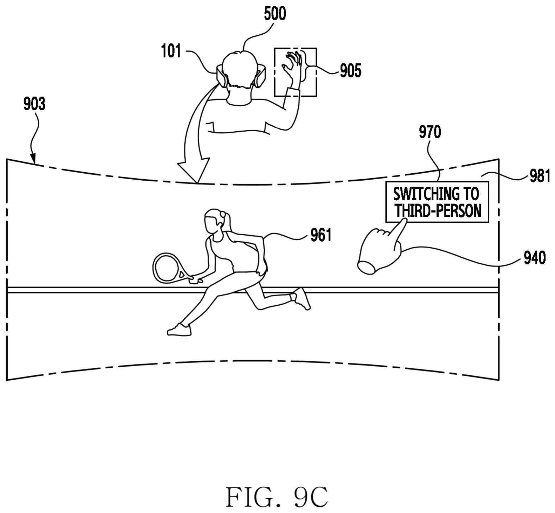

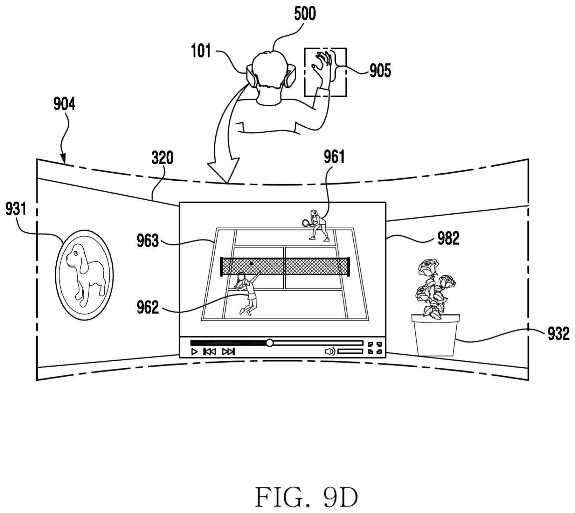

FIG. 9A illustrates an exemplary screen representing a user input for displaying a video list through a display. FIG. 9B illustrates an exemplary screen in which a video list is displayed through a display. FIG. 9C illustrates an exemplary screen in which first-person perspective content is displayed through a display in a first mode. FIG. 9D illustrates an exemplary screen in which third-person perspective content is displayed through a display in a second mode.

A processor (e.g., the processor 210 of FIG. 2) of FIG. 2 may perform operations of an electronic device 101 described with reference to FIGS. 9A, 9B, 9C and 9D. Instructions stored in memory (e.g., the memory 220 of FIG. 2), when executed by the processor 210, may cause the electronic device 101 to perform operations of the electronic device 101 illustrated in FIGS. 9A, 9B, 9C, and 9D.

Referring to FIGS. 9A, 9B, 9C and 9D, exemplary screens 901, 902, 903, and 904 displayed on a display (e.g., the display 250 of FIG. 2) of the electronic device 101 are illustrated.

Referring to FIG. 9A, the electronic device 101 may display a first screen 901 through the display 250. The first screen 901 may be a screen displayed when the electronic device 101 operates in a first mode. According to an example embodiment, the first mode, which is a mode providing a composite image for an external environment, may be referred to as a see-through mode or a pass-through mode. In the first mode, the electronic device 101 may display a composite image of the external environment on the display 250. For example, in order to represent an external environment existing beyond the display 250, the processor 210 may synthesize a virtual image with a real image obtained through the camera 230, and display the composite image on the display 250.

According to an example embodiment, the electronic device 101 may display icons corresponding to each of a plurality of software applications installed in the electronic device 101 within the first screen 901. The first screen 901, which is a screen for providing a list of a plurality of software applications installed in the electronic device 101, may be referred to as a home screen and/or a launcher screen. The electronic device 101 may display a panel 920 for providing a list of frequently executed software applications within the first screen 901. For example, the panel 920 may be referred to as a dock. Within the panel 920, the electronic device 101 may display icons (e.g., G icon and/or H icon) representing frequently executed software applications. Within the panel 920, the electronic device 101 may display the current time and/or information related to a battery of the electronic device 101. However, it is not limited thereto. According to an example embodiment, icons may be displayed within the first mode. For example, icons may overlap a composite image including visual objects (e.g., a visual objects 931 corresponding to a dog picture and a visual objects 932 corresponding to a pot) corresponding to objects included in the external environment.

According to an example embodiment, in the first screen 901 of FIG. 9A, the electronic device 101 may display an icon 910 corresponding to a software application (e.g., a gallery application) for displaying a list (e.g., a list 950 of FIG. 9B) of contents (e.g., an image and/or a video) stored in the memory 220, together with the icons. Although an embodiment in which the electronic device 101 displays the icon 910 representing the software application is described, embodiments are not limited thereto, and the electronic device 101 may also display text, an image, and/or a video representing the software application.

According to an example embodiment, the electronic device 101 may receive a first user input for executing a gallery application. The first user input may be referred to as an input of selecting the icon 910 representing the gallery application in the first screen 901. The first user input may include a hand gesture detected by the user's hand 905. For example, the electronic device 101 may obtain an image and/or a video of a body part including the user's hand 905, by using a camera (e.g., the camera 230 of FIG. 2). Based on detecting the hand 905, the electronic device 101 may display a virtual object 940 corresponding to the hand 905 in the first screen 901. The virtual object 940 may include a three dimensional graphical object representing a posture of the hand 905. For example, a posture and/or a direction of the virtual object 940 may correspond to a posture and/or a direction of the hand 905 detected by the electronic device 101.

According to an example embodiment, while displaying the virtual object 940, the electronic device 101 may display a virtual object 941 having a shape of a line extending from the virtual object 940. The virtual object 941 may be referred to as a ray, a ray object, a cursor, a pointer and/or a pointer object. The virtual object 941 may have a shape of a line extending from a portion (e.g., a palm and/or a designated finger such as index finger) of the hand 905. In FIG. 9A, the virtual object 941 having a curved shape is illustrated, but the embodiment is not limited thereto. The user 110 may change a position and/or a direction of the virtual object 940 and/or the virtual object 941 within the first screen 901, by moving the hand 905.

According to an example embodiment, while displaying an exemplary first screen 901 in which the virtual object 941 having a shape of a line extends toward the icon 910, the electronic device 101 may detect or identify a pinch gesture of the hand 905. For example, after obtaining an image 906 of the hand 905 in which fingertips of all fingers included in the hand 905 are spaced apart from each other, the electronic device 101 may obtain an image 907 of the hand 905 including at least two fingers in a shape of a ring by contacting at least two fingertips (e.g., a fingertip of thumb and a fingertip of index finger). The electronic device 101 obtaining the image 907 may detect a pinch gesture represented by at least two fingers having a ring shape. The duration of the pinch gesture may mean a period in which fingertips of at least two fingers of the hand 905 are in contact with each other, such as the image 907. The pinch gesture may correspond or mapped to a clicking and/or a tapping gesture.

According to an example embodiment, in response to a pinch gesture detected while displaying the first screen 901, the electronic device 101 may execute a gallery application corresponding to the icon 910. An exemplary operation of executing the gallery application using a hand gesture such as the pinch gesture is described, but the embodiment is not limited thereto. For example, the electronic device 101 may also execute the gallery application in response to a user's utterance (e.g., "open the gallery") and/or pressing of a physical input button.

Referring to FIG. 9B, an exemplary second screen 902 displayed by the electronic device 101 executing the gallery application is illustrated. Referring to the second screen 902, in response to a first user input for executing the gallery application, the electronic device 101 may display a list 950 of one or more videos 951 and 952 stored in memory (e.g., the memory 220 of FIG. 2) through the display 250. One or more videos 951 and 952 may be a video photographed by a camera (e.g., the camera 230 of FIG. 2). Since the video photographed by the camera 230 includes the front of the electronic device 101, it may be a first-person perspective video, so an object 962 corresponding to the user 500 may be included in the video, but an avatar 962 corresponding to the user 500 of the electronic device 101 may not be included. According to an example embodiment, the list 950 may be displayed in the first mode. For example, the list 950 may overlap a composite image that includes visual objects (e.g., a visual object 931 corresponding to a dog picture and a visual object 932 corresponding to a pot) corresponding to objects included in the external environment.

According to an example embodiment, the list 950 may include thumbnails 951a and 951b respectively corresponding to one or more videos 951 and 952. The thumbnails 951a and 951b may be an example of the above-described third-person perspective content. For example, thumbnails 951a and 951b may be third-person perspective content (e.g., a third-person perspective image or a third-person perspective video) representing the content of a first-person perspective video. For example, in case that a separate file title is not assigned even when each of the one or more videos 951 and 952 includes a file title, since the file title may be assigned based on a designated rule (e.g., photographing time), it may be difficult for the user 500 to intuitively identify which content is included in the one or more videos 951 and 952 through the file title. According to an example embodiment, since the thumbnails 951a and 951b are third-person perspective content, an avatar 962 corresponding to the user 500 of the electronic device 101 as well as an object 961 corresponding to the opponent may be included in the thumbnails 951a and 951b. The user 500 may intuitively identify the video through the third-person perspective thumbnails 951a and 951b.

According to an example embodiment, the electronic device 101 may receive a second user input for a thumbnail (e.g., 951a) included in the list 950. The second user input may be referred to as a user input for selecting the thumbnail 951a in the second screen 902. The second user input may be substantially identical to the first user input. Descriptions of the first user input may be replaced with descriptions of the second user input. According to an example embodiment, in response to a pinch gesture detected while displaying the second screen 902, the electronic device 101 may execute a video corresponding to the thumbnail 951a.

Referring to FIG. 9C, an exemplary third screen 903 in which a video 981 corresponding to the thumbnail (e.g., the thumbnail 951a of FIG. 9C) is played is illustrated. Since the video is a video 981 photographed by the camera 230 of the electronic device 101, it may be a first-person perspective video.

According to an example embodiment, the electronic device 101 may be configured to switch a mode of the display 250 from a first mode to a second mode, based on reception of the second user input. The video 981 may be played in the second mode different from the first mode. The second mode, which is a concept opposite to the see-through mode or the pass-through mode, may be referred to as a mode in which a real image is not displayed on the display 250. For example, when the user 500 turns their head while the video 981 is being played, view of the video 981 may be changed according to a gaze movement of the user 500. For example, when the video 981 corresponding to an event participating in a tennis match is played, the video 981 may include an object 961 corresponding to an opponent player.

According to an example embodiment, the electronic device 101 may receive a third user input for changing a perspective of the video 981. For example, the electronic device 101 may display a visual object 970 for the third user input for changing the perspective of the video 981 on the third screen 903. For example, the visual object 970 may be displayed overlappingly on the video 981, but is not limited thereto. For example, the visual object 970 may include text such as "switching to third-person", but is not limited thereto. The visual object 970 may include an icon and a button, and various embodiments may be possible. The electronic device 101 may perform an operation for changing a first-person perspective video 981 to a third-person perspective video (e.g., the video 982 of FIG. 9D) based on receiving the third user input. For example, the electronic device 101 may extract a prompt for generating the third-person perspective video 982. An operation of extracting the prompt may be referred to as the above described operation. For example, the electronic device 101 may generate a description for the video 981, extract a prompt based on the description, and generate the video 982 changed to a third-person perspective by inputting the extracted prompt into a generative artificial intelligence model.

Referring to FIG. 9D, an exemplary fourth screen 904 displayed by the electronic device 101 playing the video 982 changed to third-person perspective is illustrated. The video 982 may be referred to as a video in which the video shown in FIG. 9C is changed to a third-person perspective.

According to an example embodiment, the electronic device 101 may change a mode of the display 250 from the second mode to the first mode, and play the third-person perspective video 982 within the first mode. In the third-person perspective video 982, both the avatar 962 corresponding to the user 500 of the electronic device 101 and the object 961 corresponding to the opponent player may be included, and an external environment (e.g., a tennis court 963) may also be included. Referring to the fourth screen 904, in the first mode, while the third-person perspective video 982 is displayed, the external environment may be displayed in the fourth screen 904. In a case of the third-person perspective video 982, since a view change is not required according to a change in a direction of the user 500's gaze, the third-person perspective video 982 may be played within the first mode.

When the electronic device 101 according to an example embodiment is implemented as a wearable device, a mode of the display 250 may be changed according to a perspective of a video displayed on the display 250. The electronic device 101 according to an example embodiment may operate in a first mode while playing a first-person perspective video, and may operate in a third mode while playing a third-person perspective video 982. The electronic device 101 according to an example embodiment may provide a video 982 changed to the third-person perspective, and may provide an enhanced user experience by changing the mode of the display 250 based on a perspective of the video. In the above-described example, a video has been described as an example of the content, but is not limited thereto. For example, the content may be an image.

Hereinafter, the overall operations of the electronic device 101 described above are described based on a perspective performed by applications (e.g., the first application 221, the second application 222, and the third application 223) of FIG. 2. The following operations may be operations performed as the applications is executed by the processor 210 of the electronic device 101.

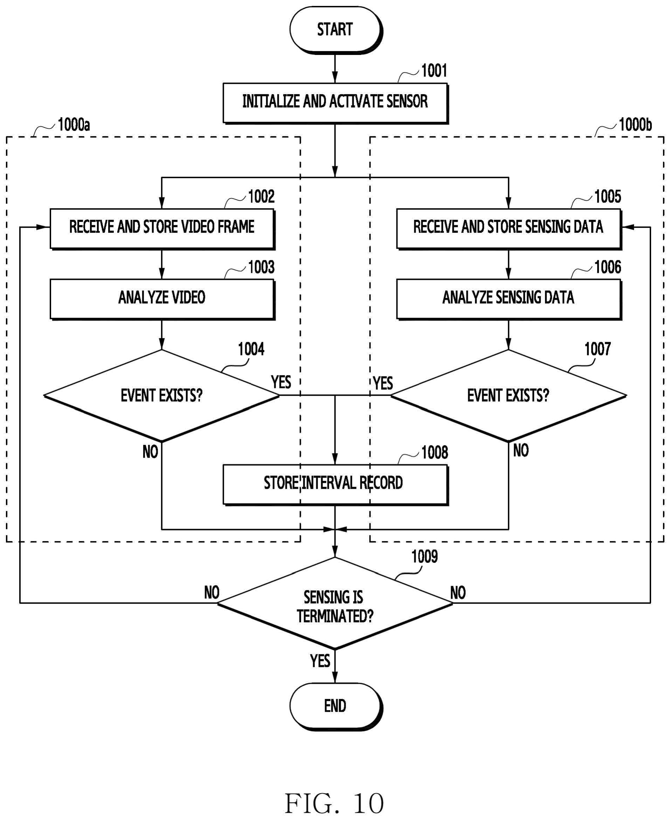

FIG. 10 is a flowchart illustrating an operation of a first application for obtaining a video or sensing data.

According to an embodiment, a first application 221, when executed by a processor (e.g., the processor 210 of FIG. 2), may be configured to store data generated during use of the electronic device 101 and detect an event interval. A user may execute the first application 221 through a third application (e.g., the third application 223 of FIG. 2).

Referring to FIG. 10, in operation 1001, the first application 221, when executed by the processor 210, may initialize a sensor of the electronic device 101 and activate the sensor. In the description of FIG. 10, the sensor, which is a multimodal sensor, may be configured to obtain various information. For example, the sensor may be referred to as a multimodal sensor including a camera (e.g., the camera 230 of FIG. 2), a sensor (e.g., the sensor 240 of FIG. 2), and/or a microphone (e.g., the microphone 270 of FIG. 2) described above. The first application 221 may initialize a sensor so that the sensor may provide accurate information. As the sensor is activated, the sensor may obtain a video and sensing data. For example, a data obtainment unit (e.g., the data obtainment unit 221a of FIG. 2) of the first application 221, when executed by the processor 210, may be configured to operate the sensor and obtain a video and/or sensing data generated by the sensor.

Operation 1002, operation 1003, and operation 1004 may be referred to as operations 1000a for a video obtained by the sensor. Operation 1005, operation 1006, and operation 1007 may be obtained by the sensor, and referred to as operations 1000b for sensing data related to the user. The operations 1000a and 1000b may be performed independently, and are not limited to the order described. For example, a data storage unit (e.g., the data storage unit 221b of FIG. 2) of the first application 221, when executed by the processor 210, may be configured to store video data in the database.

In operation 1002, when executed by the processor 210, the first application 221 may receive and store video frames. For example, the first application 221 may receive a frame of a video photographed by a sensor (e.g., camera) and store a buffer in a database. For example, the buffer may be stored in a video database of memory (e.g., the memory 220 of FIG. 2).

In operation 1003, when executed by the processor 210, the first application 221 may analyze a video. For example, one or more objects included in the video may be identified, and motion of the identified one or more objects may be analyzed. For example, an action recognition unit (e.g., the action recognition unit 221c of FIG. 2) of the first application 221, when executed by the processor 210, may be configured to analyze a video.

In operation 1004, when executed by the processor 210, the first application 221 may identify an event. For example, the first application 221 may identify whether an event exists, based on analysis of the video. When an event exists, in operation 1008, the first application 221 may record an interval in which the event was identified, and store a video frame for the interval in an event database of the memory 220. For example, an event detection unit (e.g., the event detection unit 221d of FIG. 2) of the first application 221, when executed by the processor 210, may be configured to detect an event.

In operation 1005, when executed by the processor 210, the first application 221 may receive and store sensing data. For example, the first application 221 may receive sensing data obtained by a sensor (e.g., the sensor 240 of FIG. 2), and store the sensing data in the sensor database of the memory 220. For example, a data storage unit (e.g., the data storage unit 221b of FIG. 2) of the first application 221, when executed by the processor 210, may be configured to store sensing data in the database.

In operation 1006, when executed by the processor 210, the first application 221 may analyze sensing data. For example, the first application 221 may analyze motion of a user of the electronic device 101 by analyzing the sensing data. As described above, the sensing data may include the user's speed information, motion information, location information, and/or biometric information, but it is not limited thereto. When the sensing data corresponds to reference data indicating a specific operation of the user, the first application 221 may analyze the user's motion by identifying the user's specific operation. For example, an action recognition unit (e.g., the action recognition unit 221c of FIG. 2) of the first application 221, when executed by the processor 210, may be configured to analyze sensing data.

In operation 1007, when executed by the processor 210, the first application 221 may identify an event. For example, the first application 221 may identify whether an event exists, based on analysis of the sensing data. When an event exists, in operation 1008, the first application 221 may record the interval in which the event was identified, and store sensing data for the interval in the event database of the memory 220. For example, an event detection unit (e.g., the event detection unit 221d of FIG. 2) of the first application 221, when executed by the processor 210, may be configured to detect an event.

In operation 1009, when executed by the processor 210, the first application 221 may identify whether sensing is terminated. For example, when a sensing operation of the sensor is terminated, the first application 221 may terminate the operation. When the sensing operation of the sensor is not terminated, the first application 221 may perform operations 1002 and 1005 again.

As described above, the first application 221 may be configured to store data, and identify an event from the data.

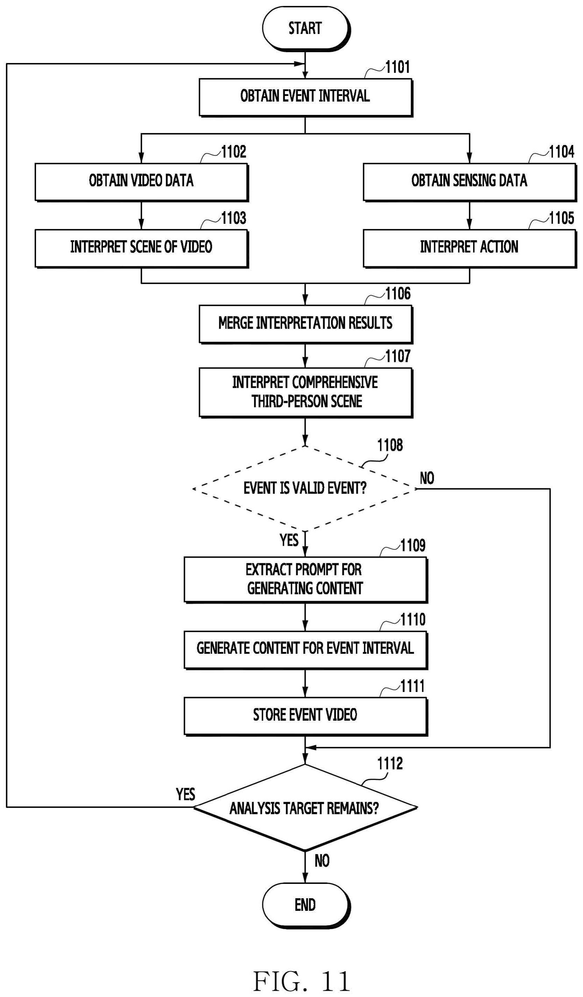

FIG. 11 is a flowchart illustrating an operation of a second application for generating content.

Referring to FIG. 11, according to an embodiment, a second application 222, when executed by a processor (e.g., the processor 210 of FIG. 2), may be configured to detect an event interval from data stored in a database, and generate content. A user may execute the second application 222 through a third application (e.g., the third application 223 of FIG. 2).

In operation 1101, when executed by the processor 210, the second application 222 may obtain the event interval in the database. For example, the second application 222 may obtain a video and/or sensing data for the event interval analyzed and stored by a first application (e.g., the first application 221 of FIG. 2).

In operation 1102, when executed by the processor 210, the second application 222 may obtain video data for the event interval. For example, the second application 222 may obtain video frames corresponding to the event interval.

In operation 1103, when executed by the processor 210, the second application 222 may interpret a scene of a video. For example, the second application 222 may interpret the video from a first-person perspective and a third-person perspective. For example, when the video includes a screen of talking to another person, a first-person perspective interpretation may be an interpretation, such as "A (other person) is talking", and a third-person perspective interpretation may be an interpretation, such as "I'm talking to A". However, it is not limited thereto. For example, when executed by the processor 210, a first-person event interpretation unit (e.g., the first-person event interpretation unit 222a of FIG. 2) of the second application 222 may perform a first-person perspective interpretation. For example, when executed by the processor 210, a third-person event interpretation unit (e.g., the third-person event interpretation unit 222b of FIG. 2) of the second application 222 may perform a third-person perspective interpretation.

In operation 1104, when executed by the processor 210, the second application 222 may obtain sensing data for the event interval.

In operation 1105, when executed by the processor 210, the second application 222 may interpret an action. For example, the second application 222 may interpret the user's action based on sensing data for the event interval. For example, when the sensing data corresponds to reference data indicating a specific operation of the user, the second application 222 may interpret the specific operation based on the sensing data. For example, when the sensing data corresponds to reference data representing speed information, location information, and/or motion information corresponding riding a bicycle, the second application 222 may interpret the user's operation of riding a bicycle.

In operation 1106, when executed by the processor 210, the second application 222 may merge interpretation results. For example, the second application 222 may merge a result interpreted from the video and a result interpreted from the sensing data.

In operation 1107, when executed by the processor 210, the second application 222 may interpret a comprehensive third-person scene. For example, the second application 222 may perform a comprehensive third-person scene interpretation for based on the merged interpretation result. For example, when executed by the processor 210, a comprehensive scene interpretation unit (e.g., the comprehensive scene interpretation unit 222c of FIG. 2) of the second application 222 may interpret the comprehensive scene.

In operation 1108, when executed by the processor 210, the second application 222 may identify whether the event is a valid event. For example, the second application 222 may identify whether a comprehensively interpreted event is a valid event. For example, when the comprehensively interpreted event is an event that may occur frequently in everyday life (e.g., stretching), the second application 222 may identify the event as an invalid event. When the event is a valid event, operation 1109 may be performed. When the event is an invalid event, operation 1112 may be performed. According to an embodiment, operation 1108 may be omitted. For example, when the electronic device 101 is set to generate content for all events, operation 1108 may not be performed, and operation 1109 may be performed.

In operation 1109, when executed by the processor 210, the second application 222 may extract a prompt for generating content. According to an embodiment, the prompt may be a prompt for generating third-person perspective content. For example, a prompt extraction unit (e.g., the prompt extraction unit 222d of FIG. 2) of the second application 222, when executed by the processor 210, may be configured to extract a prompt for generating content.

In operation 1110, when executed by the processor 210, the second application 222 may generate content for the event interval. For example, the second application 222 may generate content for the event interval, by inputting the extracted prompt into the generative artificial intelligence model. The content may be a third-person perspective event video for the event interval. For example, a content generation unit (e.g., the content generation unit 222e of FIG. 2) of the second application 222, when executed by the processor 210, may be configured to generate content by inputting a prompt into a generative artificial intelligence model.

In operation 1111, when executed by the processor 210, the second application 222 may store an event video. For example, the second application 222 may store the generated event video in the event database of the memory.

In operation 1112, when executed by the processor 210, the second application 222 may identify whether an analysis target remains. For example, the second application 222 may identify whether an event to be an analysis target remains in the database, and perform operation 1101 again when the analysis target remains. When an event to be an analysis target does not remain, the operation may be terminated.

Hereinafter, an exemplary appearance of a wearable device is illustrated as an example of the electronic device 101 described above with reference to FIGS. 12A, 12B, 13A and/or 13B. A wearable device 1200 of FIGS. 12A and 12B and/or a wearable device 1300 of FIGS. 13A and 13B may be an example of the electronic device 101 described above.

FIG. 12A illustrates a perspective view of a wearable device according to an example embodiment. FIG. 12B illustrates one or more hardware disposed in a wearable device according to an example embodiment.

The wearable device 1200 according to an example embodiment may have a shape of glasses wearable on a user's body part (e.g., head). The wearable device 1200 may include a head-mounted display (HMD). For example, a housing of the wearable device 1200 may include a flexible material, such as rubber and/or silicone, which is configured to fit closely to a portion (e.g., a portion of face surrounding both eyes) of the user's head. For example, the housing of the wearable device 1200 may include one or more straps able to be twined around the user's head and/or one or more temples attachable to the head's ear.

Referring to FIG. 12A, the wearable device 1200 according to an example embodiment may include at least one display 1250 and a frame supporting the at least one display 1250.

According to an example embodiment, the wearable device 1200 may be wearable on a portion of the user's body. The wearable device 1200 may provide augmented reality (AR), virtual reality (VR), or mixed reality (MR) combining the augmented reality and the virtual reality to a user wearing the wearable device 1200. For example, the wearable device 1200 may display a virtual reality image provided from at least one optical device 1282 and 1284 of FIG. 12B on at least one display 1250, in response to a user's preset gesture obtained through a motion recognition camera 1260-2 and 1260-3 of FIG. 12B.

According to an example embodiment, the at least one display 1250 may provide visual information to a user. For example, the at least one display 1250 may include a transparent or translucent lens. The at least one display 1250 may include a first display 1250-1 and/or a second display 1250-2 spaced apart from the first display 1250-1. For example, the first display 1250-1 and the second display 1250-2 may be disposed at positions corresponding to the user's left and right eyes, respectively.

Referring to FIG. 12B, the at least one display 1250 may provide visual information transmitted from ambient light to a user and other visual information distinguished from the visual information, through a lens included in at least one display 1250. The lens may be formed based on at least one of a Fresnel lens, a pancake lens, or a multi-channel lens. For example, the at least one display 1250 may include a first surface 1231 and a second surface 1232 opposite to the first surface 1231. A display area may be formed on the second surface 1232 of at least one display 1250. When the user wears the wearable device 1200, ambient light may be transmitted to the user by being incident on the first surface 1231 and being penetrated through the second surface 1232. For another example, the at least one display 1250 may display an augmented reality image in which a virtual reality image provided by the at least one optical device 1282 and 1284 is combined with a reality screen transmitted through ambient light, on a display area formed on the second surface 1232.

According to an example embodiment, the at least one display 1250 may include at least one waveguide 1233 and 1234 that transmits light transmitted from the at least one optical device 1282 and 1284 by diffracting to the user. The at least one waveguide 1233 and 1234 may be formed based on at least one of glass, plastic, or polymer. A nano pattern may be formed on at least a portion of the outside or inside of the at least one waveguide 1233 and 1234. The nano pattern may be formed based on a grating structure having a polygonal or curved shape. Light incident to an end of the at least one waveguide 1233 and 1234 may be propagated to another end of the at least one waveguide 1233 and 1234 by the nano pattern. The at least one waveguide 1233 and 1234 may include at least one of at least one diffraction element (e.g., a diffractive optical element (DOE), a holographic optical element (HOE)), and a reflection element (e.g., a reflection mirror). For example, the at least one waveguide 1233 and 1234 may be disposed in the wearable device 1200 to guide a screen displayed by the at least one display 1250 to the user's eyes. For example, the screen may be transmitted to the user's eyes through total internal reflection (TIR) generated in the at least one waveguide 1233 and 1234.

The wearable device 1200 may analyze an object included in a real image collected through a photographing camera 1260-4, combine with a virtual object corresponding to an object that become a subject of augmented reality provision among the analyzed object, and display on the at least one display 1250. The virtual object may include at least one of text and images for various information associated with the object included in the real image. The wearable device 1200 may analyze the object based on a multi-camera, such as a stereo camera. For the object analysis, the wearable device 1200 may execute space recognition (e.g., simultaneous localization and mapping (SLAM) using the multi-camera and/or time-of-flight (ToF). The user wearing the wearable device 1200 may watch an image displayed on the at least one display 1250.

According to an example embodiment, a frame may be configured with a physical structure in which the wearable device 1200 may be worn on the user's body. According to an example embodiment, the frame may be configured so that when the user wears the wearable device 1200, the first display 1250-1 and the second display 1250-2 may be positioned corresponding to the user's left and right eyes. The frame may support the at least one display 1250. For example, the frame may support the first display 1250-1 and the second display 1250-2 to be positioned at positions corresponding to the user's left and right eyes.

Referring to FIG. 12A, according to an example embodiment, the frame may include an area 1220 at least partially in contact with the portion of the user's body in case that the user wears the wearable device 1200. For example, the area 1220 of the frame in contact with the portion of the user's body may include an area in contact with a portion of the user's nose, a portion of the user's ear, and a portion of the side of the user's face that the wearable device 1200 contacts. According to an example embodiment, the frame may include a nose pad 1210 that is contacted on the portion of the user's body. When the wearable device 1200 is worn by the user, the nose pad 1210 may be contacted on the portion of the user's nose. The frame may include a first temple 1204 and a second temple 1205 that is contacted on another portion of the user's body that is distinct from the portion of the user's body.

For example, the frame may include a first rim 1201 surrounding at least a portion of the first display 1250-1, a second rim 1202 surrounding at least a portion of the second display 1250-2, a bridge 1203 disposed between the first rim 1201 and the second rim 1202, a first pad 1211 disposed along a portion of the edge of the first rim 1201 from one end of the bridge 1203, a second pad 1212 disposed along a portion of the edge of the second rim 1202 from the other end of the bridge 1203, the first temple 1204 extending from the first rim 1201 and fixed to a portion of the wearer's ear, and the second temple 1205 extending from the second rim 1202 and fixed to a portion of the ear opposite to the ear. The first pad 1211 and the second pad 1212 may be in contact with the portion of the user's nose, and the first temple 1204 and the second temple 1205 may be in contact with a portion of the user's face and the portion of the user's ear. The temples 1204 and 1205 may be rotatably connected to the rim through hinge units 1206 and 1207 of FIG. 12B. The first temple 1204 may be rotatably connected with respect to the first rim 1201 through the first hinge unit 1206 disposed between the first rim 1201 and the first temple 1204. The second temple 1205 may be rotatably connected with respect to the second rim 1202 through the second hinge unit 1207 disposed between the second rim 1202 and the second temple 1205. According to an example embodiment, the wearable device 1200 may identify an external object (e.g., a user's fingertip) touching the frame and/or a gesture performed by the external object by using a touch sensor, a grip sensor, and/or a proximity sensor formed on at least a portion of the surface of the frame.

According to an example embodiment, the wearable device 1200 may include hardware (e.g., hardware described above based on the block diagram of FIG. 2) that performs various functions. For example, the hardware may include a battery module 1270, an antenna module 1275, the at least one optical device 1282 and 1284, speakers (e.g., speakers 1255-1 and 1255-2), a microphone (e.g., microphones 1265-1, 1265-2, and 1265-3), a light emitting module (not illustrated), and/or a printed circuit board (PCB) 1290. Various hardware components may be disposed in the frame.

According to an example embodiment, the microphone (e.g., the microphones 1265-1, 1265-2, and 1265-3) of the wearable device 1200 may obtain a sound signal, by being disposed on at least a portion of the frame. The first microphone 1265-1 disposed on the bridge 1203, the second microphone 1265-2 disposed on the second rim 1202, and the third microphone 1265-3 disposed on the first rim 1201 are illustrated in FIG. 12B, but the number and disposition of the microphone 1265 are not limited to an example embodiment of FIG. 12B. In case that the number of the microphone 1265 included in the wearable device 1200 is two or more, the wearable device 1200 may identify a direction of the sound signal by using a plurality of microphones disposed on different portions of the frame.

According to an example embodiment, the at least one optical device 1282 and 1284 may project a virtual object on the at least one display 1250 in order to provide various image information to the user. For example, the at least one optical device 1282 and 1284 may be a projector. The at least one optical device 1282 and 1284 may be disposed adjacent to the at least one display 1250 or may be included in the at least one display 1250 as a portion of the at least one display 1250. According to an example embodiment, the wearable device 1200 may include a first optical device 1282 corresponding to the first display 1250-1, and a second optical device 1284 corresponding to the second display 1250-2. For example, the at least one optical device 1282 and 1284 may include the first optical device 1282 disposed at a periphery of the first display 1250-1 and the second optical device 1284 disposed at a periphery of the second display 1250-2. The first optical device 1282 may transmit light to the first waveguide 1233 disposed on the first display 1250-1, and the second optical device 1284 may transmit light to the second waveguide 1234 disposed on the second display 1250-2.

In an embodiment, a camera 1260 may include the photographing camera 1260-4, an eye tracking camera (ET CAM) 1260-1, and/or the motion recognition camera 1260-2 and camera 1260-3. The photographing camera 1260-4, the eye tracking camera 1260-1, and the motion recognition camera 1260-2 and camera 1260-2 may be disposed at different positions on the frame and may perform different functions. The eye tracking camera 1260-1 may output data indicating a position of eye or the gaze of the user wearing the wearable device 1200. For example, the wearable device 1200 may detect the gaze from an image including the user's pupil obtained through the eye tracking camera 1260-1.

The wearable device 1200 may identify an object (e.g., a real object, and/or a virtual object) focused by the user, by using the user's gaze obtained through the eye tracking camera 1260-1. The wearable device 1200 identifying the focused object may execute a function (e.g., gaze interaction) for interaction between the user and the focused object. The wearable device 1200 may represent a portion corresponding to eye of an avatar indicating the user in the virtual space, by using the user's gaze obtained through the eye tracking camera 1260-1. The wearable device 1200 may render an image (or a screen) displayed on the at least one display 1250, based on the position of the user's eye.

For example, visual quality (e.g., resolution, brightness, saturation, grayscale, and pixels per inch (PPI)) of a first area related to the gaze within the image and visual quality of a second area distinguished from the first area may be different. The wearable device 1200 may obtain an image having the visual quality of the first area matching the user's gaze and the visual quality of the second area by using foveated rendering. For example, when the wearable device 1200 supports an iris recognition function, user authentication may be performed based on iris information obtained using the eye tracking camera 1260-1. An example in which the eye tracking camera 1260-1 is disposed toward the user's right eye is illustrated in FIG. 12B, but the embodiment is not limited thereto, and the eye tracking camera 1260-1 may be disposed alone toward the user's left eye or may be disposed toward two eyes.

In an example embodiment, the photographing camera 1260-4 may photograph a real image or background to be matched with a virtual image in order to implement the augmented reality or mixed reality content. The photographing camera 1260-4 may be used to obtain an image having a high resolution based on a high resolution (HR) or a photo video (PV). The photographing camera 1260-4 may photograph an image of a specific object existing at a position viewed by the user and may provide the image to the at least one display 1250. The at least one display 1250 may display one image in which a virtual image provided through the at least one optical device 1282 and 1284 is overlapped with information on the real image or background including an image of the specific object obtained by using the photographing camera. The wearable device 1200 may compensate for depth information (e.g., a distance between the wearable device 1200 and an external object obtained through a depth sensor), by using an image obtained through the photographing camera 1260-4. The wearable device 1200 may perform object recognition through an image obtained using the photographing camera 1260-4. The wearable device 1200 may perform a function (e.g., auto focus) of focusing an object (or subject) within an image and/or an optical image stabilization (OIS) function (e.g., an anti-shaking function) by using the photographing camera 1260-4. While displaying a screen representing a virtual space on the at least one display 1250, the wearable device 1200 may perform a pass through function for displaying an image obtained through the photographing camera 1260-4 overlapping at least a portion of the screen. In an example embodiment, the photographing camera may be disposed on the bridge 1203 disposed between the first rim 1201 and the second rim 1202.

The eye tracking camera 1260-1 may implement a more realistic augmented reality by matching the user's gaze with the visual information provided on the at least one display 1250, by tracking the gaze of the user wearing the wearable device 1200. For example, when the user looks at the front, the wearable device 1200 may naturally display environment information associated with the user's front on the at least one display 1250 at a position where the user is positioned. The eye tracking camera 1260-1 may be configured to capture an image of the user's pupil in order to determine the user's gaze. For example, the eye tracking camera 1260-1 may receive gaze detection light reflected from the user's pupil and may track the user's gaze based on the position and movement of the received gaze detection light. In an example embodiment, the eye tracking camera 1260-1 may be disposed at a position corresponding to the user's left and right eyes. For example, the eye tracking camera 1260-1 may be disposed in the first rim 1201 and/or the second rim 1202 to face the direction in which the user wearing the wearable device 1200 is positioned.

The motion recognition camera 1260-2 and camera 1260-3 may provide a specific event to the screen provided on the at least one display 1250 by recognizing the movement of the whole or portion of the user's body, such as the user's torso, hand, or face. The motion recognition camera 1260-2 and camera 1260-3 may obtain a signal corresponding to motion by recognizing the user's motion (e.g., gesture recognition), and may provide a display corresponding to the signal to the at least one display 1250. The processor may identify a signal corresponding to the operation and may perform a preset function based on the identification. The motion recognition camera 1260-2 and 1260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition cameras 1260-2 and 1260-3. In an example embodiment, the motion recognition camera 1260-2 and camera 1260-3 may be disposed on the first rim 1201 and/or the second rim 1202.

The camera 1260 included in the wearable device 1200 is not limited to the above-described eye tracking camera 1260-1 and the motion recognition camera 1260-2 and 1260-3. For example, the wearable device 1200 may identify an external object included in the field of view (FoV) by using a camera disposed toward the user's FoV. That the wearable device 1200 identifies the external object may be performed based on a sensor for identifying a distance between the wearable device 1200 and the external object, such as a depth sensor and/or a time of flight (ToF) sensor. The camera 1260 disposed toward the FoV may support an autofocus function and/or an optical image stabilization (OIS) function. For example, in order to obtain an image including a face of the user wearing the wearable device 1200, the wearable device 1200 may include the camera 1260 (e.g., a face tracking (FT) camera) disposed toward the face.

Although not illustrated, the wearable device 1200 according to an example embodiment may further include a light source (e.g., LED) that emits light toward a subject (e.g., user's eyes, face, and/or an external object in the FoV) photographed by using the camera 1260. The light source may include an LED having an infrared wavelength. The light source may be disposed on at least one of the frame, and the hinge units 1206 and 1207.

According to an example embodiment, the battery module 1270 may supply power to electronic components of the wearable device 1200. In an example embodiment, the battery module 1270 may be disposed in the first temple 1204 and/or the second temple 1205. For example, the battery module 1270 may be a plurality of battery modules 1270. The plurality of battery modules 1270, respectively, may be disposed on each of the first temple 1204 and the second temple 1205. In an example embodiment, the battery module 1270 may be disposed at an end of the first temple 1204 and/or the second temple 1205.

The antenna module 1275 may transmit the signal or power to the outside of the wearable device 1200 or may receive the signal or power from the outside. In an example embodiment, the antenna module 1275 may be disposed in the first temple 1204 and/or the second temple 1205. For example, the antenna module 1275 may be disposed close to one surface of the first temple 1204 and/or the second temple 1205.

A speaker 1255 may output a sound signal to the outside of the wearable device 1200. A sound output module may be referred to as a speaker. In an example embodiment, the speaker 1255 may be disposed in the first temple 1204 and/or the second temple 1205 in order to be disposed adjacent to the ear of the user wearing the wearable device 1200. For example, the speaker 1255 may include a second speaker 1255-2 disposed adjacent to the user's left ear by being disposed in the first temple 1204, and a first speaker 1255-1 disposed adjacent to the user's right ear by being disposed in the second temple 1205.

The light emitting module (not illustrated) may include at least one light emitting element. The light emitting module may emit light of a color corresponding to a specific state or may emit light through an operation corresponding to the specific state in order to visually provide information on a specific state of the wearable device 1200 to the user. For example, when the wearable device 1200 requires charging, it may emit red light at a constant cycle. In an example embodiment, the light emitting module may be disposed on the first rim 1201 and/or the second rim 1202.

Referring to FIG. 12B, according to an example embodiment, the wearable device 1200 may include the printed circuit board (PCB) 1290. The PCB 1290 may be included in at least one of the first temple 1204 or the second temple 1205. The PCB 1290 may include an interposer disposed between at least two sub PCBs. On the PCB 1290, one or more hardware (e.g., hardware illustrated by the blocks described above with reference to FIG. 2) included in the wearable device 1200 may be disposed. The wearable device 1200 may include a flexible PCB (FPCB) for interconnecting the hardware.

According to an example embodiment, the wearable device 1200 may include at least one of a gyro sensor, a gravity sensor, and/or an acceleration sensor for detecting the posture of the wearable device 1200 and/or the posture of a body part (e.g., a head) of the user wearing the wearable device 1200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an example embodiment, the wearable device 1200 may identify the user's motion and/or gesture performed to execute or stop a specific function of the wearable device 1200 based on the IMU.

FIGS. 13A and 13B illustrate an appearance of a wearable device according to an example embodiment.

A wearable device 1300 of FIGS. 13A and 13B may include at least a portion of hardware of the wearable device 1200 described with reference to FIGS. 12A and/or 12B. According to an example embodiment, an example of an appearance of a first surface 1310 of a housing of the wearable device 1300 may be illustrated in FIG. 13A, and an example of an appearance of a second surface 1320 opposite to the first surface 1310 may be illustrated in FIG. 13B.

Referring to FIG. 13A, according to an example embodiment, the first surface 1310 of the wearable device 1300 may have an attachable shape on the user's body part (e.g., the user's face). Although not illustrated, the wearable device 1300 may further include a strap for being fixed on the user's body part, and/or one or more temples (e.g., the first temple 1204 and/or the second temple 1205 of FIGS. 12A and 12B). A first display 1250-1 for outputting an image to the left eye among the user's two eyes and a second display 1250-2 for outputting an image to the right eye among the user's two eyes may be disposed on the first surface 1310. The wearable device 1300 may further include rubber or silicon packing, which are formed on the first surface 1310, for preventing interference by light (e.g., ambient light) different from the light emitted from the first display 1250-1 and the second display 1250-2.

According to an example embodiment, the wearable device 1300 may include cameras 1260-1 for photographing and/or tracking two eyes of the user adjacent to each of the first display 1250-1 and the second display 1250-2. The cameras 1260-1 may be referred to as the gaze tracking camera 1260-1 of FIG. 12B. According to an example embodiment, the wearable device 1300 may include cameras 1260-5 and 1260-6 for photographing and/or recognizing the user's face. The cameras 1260-5 and 1260-6 may be referred to as a FT camera. The wearable device 1300 may control an avatar representing a user in a virtual space, based on a motion of the user's face identified using the cameras 1260-5 and 1260-6. For example, the wearable device 1300 may change a texture and/or a shape of a portion (e.g., a portion of an avatar representing a human face) of the avatar, by using information obtained by the cameras 1260-5 and 1260-6 (e.g., the FT camera) and representing the facial expression of the user wearing the wearable device 1300.

Referring to FIG. 13B, a camera (e.g., cameras 1260-7, 1260-8, 1260-9, 1260-10, 1260-11, and 1260-12), and/or a sensor (e.g., the depth sensor 1330) for obtaining information associated with the external environment of the wearable device 1300 may be disposed on the second surface 1320 opposite to the first surface 1310 of FIG. 13A. For example, the cameras 1260-7, 1260-8, 1260-9, and 1260-10 may be disposed on the second surface 1320 in order to recognize an external object. The cameras 1260-7, 1260-8, 1260-9, and 1260-10 of FIG. 13B may be referred to the motion recognition cameras 1260-2 and 1260-3 of FIG. 12B.

For example, by using cameras 1260-11 and 1260-12, the wearable device 1300 may obtain an image and/or video to be transmitted to each of the user's two eyes. The camera 1260-11 may be disposed on the second surface 1320 of the wearable device 1300 to obtain an image to be displayed through the second display 1250-2 corresponding to the right eye among the two eyes. The camera 1260-12 may be disposed on the second surface 1320 of the wearable device 1300 to obtain an image to be displayed through the first display 1250-1 corresponding to the left eye among the two eyes. The cameras 1260-11 and 1260-12 may be referred to the photographing camera 1260-4 of FIG. 12B.

According to an example embodiment, the wearable device 1300 may include the depth sensor 1330 disposed on the second surface 1320 in order to identify a distance between the wearable device 1300 and the external object. By using the depth sensor 1330, the wearable device 1300 may obtain spatial information (e.g., a depth map) about at least a portion of the FoV of the user wearing the wearable device 1300. Although not illustrated, a microphone for obtaining sound outputted from the external object may be disposed on the second surface 1320 of the wearable device 1300. The number of microphones may be one or more according to embodiments.

An electronic device 101 is provided. The electronic device 101 may comprise a processor 210 comprising processing circuitry. The electronic device 101 may comprise memory 220 storing instructions. The electronic device 101 may comprise a camera 230 to generate a video. The electronic device 101 may comprise a sensor 240 to obtain sensing data related to a user of the electronic device 101. The electronic device 101 may comprise a microphone 270 to generate audio. The instructions, when executed by the processor 210 individually or collectively, may cause the electronic device 101 to identify an event based on at least one of the video or the sensing data. The instructions, when executed by the processor 210 individually or collectively, may cause the electronic device 101 to generate a description representing the event. The instructions, when executed by the processor 210 individually or collectively, may cause the electronic device 101 to extract a prompt to generate third-person perspective content corresponding to the event. The instructions, when executed by the processor 210 individually or collectively, may cause the electronic device 101 to obtain the third-person perspective content by inputting the prompt to a generative artificial intelligence model.

For example, the instructions, when executed by the processor 210 individually or collectively, may cause the electronic device 101 to identify a first event based on the video. The instructions, when executed by the processor 210 individually or collectively, may cause the electronic device 101 to generate a first description representing a video corresponding to a first interval in which the first event was identified. The instructions, when executed by the processor 210 individually or collectively, may cause the electronic device 101 to identify a second event based on the sensing data. The instructions, when executed by the processor 210 individually or collectively, may cause the electronic device 101 to generate a second description representing a video corresponding to a second interval in which the second event was identified. The instructions, when executed by the processor 210 individually or collectively, may cause the electronic device 101 to generate a third description representing a third event, based on at least one of the first description or the second description. The instructions, when executed by the processor 210 individually or collectively, may cause the electronic device 101 to extract a prompt for generating third-person perspective content corresponding to the third event from the third description. The third event may be an event identified as an event related to the user based on at least one of the first event or the second event. The instructions, when executed by the processor 210 individually or collectively, may cause the electronic device 101 to generate the third-person perspective content by inputting the prompt to the generative artificial intelligence model.

For example, the instructions, when executed by the processor 210 individually or collectively, may cause the electronic device 101 to extract the prompt for generating third-person perspective content corresponding to the third event from the third description, based on identifying that the third event corresponds to a valid event.

For example, the third-person perspective content may include a thumbnail corresponding to the video.

For example, the electronic device 101 may further comprise a display 250 for displaying visual information. For example, the instructions, when executed by the processor 210 individually or collectively, may cause the electronic device 101 to receive a first user input to display a video list including the thumbnail corresponding to the video through the display 250. For example, the instructions, when executed by the processor 210 individually or collectively, may cause the electronic device 101 to display the video list through the display 250, based on receiving of the first user input. For example, the instructions, when executed by the processor 210 individually or collectively, may cause the electronic device 101 to receive a second user input for one thumbnail in the video list. For example, the instructions, when executed by the processor 210 individually or collectively, may cause the electronic device 101 to play a video corresponding to the one thumbnail through the display 250, based on receiving of the second user input.

For example, the instructions, when executed by the processor 210 individually or collectively, may cause the electronic device 101 to identify the event, based on one or more objects in the video.

For example, the instructions, when executed by the processor 210 individually or collectively, may cause the electronic device 101 to estimate an action of the user, based on the sensing data. The instructions, when executed by the processor 210 individually or collectively, may cause the electronic device 101 to identify the event, based on the estimated action of the user.

For example, the memory 220 may store a first software application 221. The first software application 221, when executed by the processor 210 individually or collectively, may cause the electronic device 101 to store the video and the sensing data, generated in real time. The first software application 221, when executed by the processor 210 individually or collectively, may cause the electronic device 101 to identify a first event, based on the video. The first software application 221, when executed by the processor 210 individually or collectively, may cause the electronic device 101 to store a video corresponding to the first interval in which the first event was identified in the memory 220. The first software application 221, when executed by the processor 210 individually or collectively, may cause the electronic device 101 to identify a second event, based on the sensing data. The first software application 221, when executed by the processor 210 individually or collectively, may cause the electronic device 101 to store the sensing data corresponding to the second interval in which the second event was identified in the memory 220.

For example, the memory 220 may store a second software application 222. The second software application 222, when executed by the processor 210 individually or collectively, may cause the electronic device 101 to generate a first description representing the video corresponding to the first interval based on the video corresponding to the first interval. The second software application 222, when executed by the processor 210 individually or collectively, may cause the electronic device 101 to generate the second description representing the sensing data corresponding to the second interval based on the sensing data corresponding to the second interval.

For example, the first description may include a first-person perspective description and a third-person perspective description. The second description may include a first-person perspective description. The third description may include a third-person perspective description.

For example, the third-person perspective content may include an avatar corresponding to the user of the electronic device 101.

For example, the avatar corresponding to the user of the electronic device 101 may include an avatar based on an object corresponding to the user included in the content.

For example, the sensor 240 may include at least one of a sensor for tracking the user's gaze, a sensor for obtaining data related to the user's biometric information, a sensor for obtaining data related to audio, or a sensor for obtaining data related to the user's motion.

For example, the instructions, when executed by the processor 210 individually or collectively, may cause the electronic device 101 to generate third-person perspective content corresponding to first-person perspective content received from an external electronic device, using the generative artificial intelligence model.

For example, the electronic device 101 may include a wearable device. For example, the instructions, when executed by the processor 210 individually or collectively, may cause the electronic device 101 to change the camera 230 and the sensor 240 from an inactive state to an active state, based on identifying wearing of the wearable device.

For example, the electronic device 101 may include a head mounted display (HMD) device. The instructions, when executed by the processor 210 individually or collectively, may cause the HMD device to receive a user input to play the video through the display 250, in a first mode providing a composite image of an external environment. The instructions, when executed by the processor 210 individually or collectively, may cause the HMD device to change from the first mode to a second mode different from the first mode, based on receiving of the user input. The instructions, when executed by the processor 210 individually or collectively, may cause the HMD device to play the video, through the display 250, in the second mode.

For example, the instructions, when executed by the processor 210 individually or collectively, may cause the HMD device to receive a user input to change the video to a third-person perspective, while the video is playing. The instructions, when executed by the processor 210 individually or collectively, may cause the HMD device to extract a prompt to generate a third-person perspective video, based on receiving the user input to change the video to the third-person perspective. The instructions, when executed by the processor 210 individually or collectively, may cause the HMD device to generate the third-person perspective video, by inputting the prompt into the generative artificial intelligence model. The instructions, when executed by the processor 210 individually or collectively, may cause the HMD device to change the second mode to the first mode. The instructions, when executed by the processor 210 individually or collectively, may cause the HMD device to play the third-person perspective video, in the first mode.

A method performed by an electronic device is provided. The method may comprise identifying an event based on a video or a sensing data. The method may comprise generating a description representing the event. The method may comprise extracting a prompt for generating third-person perspective content corresponding to the event. The method may comprise generating the third-person content, by inputting the prompt into a generative artificial intelligence model.

For example, the content may include a thumbnail corresponding to the video.

For example, the method may further comprise receiving a first user input to display a video list including the thumbnail corresponding to the video through a display 250 of the electronic device 101. The method may further comprise displaying the thumbnail list through the display 250, based on receiving of the first user input. The method may further comprise receiving a second user input for a thumbnail included in the list. The method may further comprise playing a video corresponding to the thumbnail through the display 250, based on receiving of the second user input.

For example, the method may further comprise identifying a first event based on one or more objects in the video. The method may further comprise generating a first description representing a video corresponding to a first interval in which the first event was identified. The method may further comprise identifying a second event based on the sensing data. The method may further comprise generating a second description representing sensing data corresponding to a second interval in which the second event was identified. The method may further comprise generating a third description representing a third event, based on at least one of the first description or the second description. The method may further comprise extracting a prompt for generating third-person perspective content corresponding to the third event from the third description. The method may further comprise generating the content by inputting the prompt to the generative artificial intelligence model. For example, the content may include an avatar corresponding to a user.

For example, the content includes an avatar corresponding to a user.

A wearable device is provided. The wearable device may include a display 250 for displaying visual information. The wearable device may include a camera 230 for generating a video. The wearable device may include a sensor 240 for obtaining sensing data related to a user of the wearable device. The wearable device may include memory 220 storing instructions. The wearable device may include a processor 210 comprising processing circuitry. The instructions, when executed by the processor 210, may cause the wearable device to obtain the video and the sensing data by switching the camera 230 and the sensor 240 to an active state, based on identifying wearing of the wearable device. The instructions, when executed by the processor 210, may cause the wearable device to identify a first event, based on the video. The instructions, when executed by the processor 210, may cause the wearable device to generate a first description representing a video corresponding to a first interval in which the first event was identified. The instructions, when executed by the processor 210, may cause the wearable device to identify a second event based on the sensing data. The instructions, when executed by the processor 210, may cause the wearable device to generate a second description representing sensing data corresponding to a second interval in which the second event was identified. The instructions, when executed by the processor 210, may cause the wearable device to generate a third description representing a third event, based on at least one of the first description or the second description. The instructions, when executed by the processor 210, may cause the wearable device to extract a prompt for generating third-person perspective content corresponding to the third event, from the third description, based on identifying that the third event corresponds to a valid event. The instructions, when executed by the processor 210, may cause the wearable device to generate the content by inputting the prompt into a generative artificial intelligence model.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage, such as, for example, a storage device like read only memory (ROM), whether erasable or rewritable or not, or in the form of memory, such as, for example, random access memory (RAM), memory chips, device or integrated circuits or on an optically or magnetically readable medium, such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a processor comprising processing circuitry; and
memory comprising one or more storage mediums storing instructions;
a camera configured to generate a video;
a sensor configured to obtain sensing data related to a user of the electronic device; and
a microphone configured to generate audio,
wherein the instructions, when executed by the processor individually or collectively, cause the electronic device to:
identify an event based on at least one of the video or the sensing data,
generate a description representing the event,
extract a prompt to generate third-person perspective content corresponding to the event, and
obtain the third-person perspective content by inputting the prompt to a generative artificial intelligence model.

2. The electronic device of claim 1, wherein the instructions, when executed by the processor individually or collectively, cause the electronic device to:
identify a first event based on the video,
generate a first description representing a video corresponding to a first interval in which the first event was identified,
identify a second event based on the sensing data,
generate a second description representing a video corresponding to a second interval in which the second event was identified,
generate a third description representing a third event, based on at least one of the first description or the second description,
extract a prompt for generating third-person perspective content corresponding to the third event from the third description, wherein the third event is an event identified as an event related to the user based on at least one of the first event or the second event, and
generate the third-person perspective content by inputting the prompt to the generative artificial intelligence model.

3. The electronic device of claim 2, wherein the instructions, when executed by the processor individually or collectively, cause the electronic device to:
extract the prompt for generating third-person perspective content corresponding to the third event from the third description, based on identifying that the third event corresponds to a valid event.

4. The electronic device of any one of claims 1 to 3, wherein the third-person perspective content includes a thumbnail corresponding to the video.

5. The electronic device of claim 4, further comprising a display configured to display visual information,
wherein the instructions, when executed by the processor individually or collectively, cause the electronic device to:
receive a first user input to display a video list including the thumbnail corresponding to the video through the display,
display the video list through the display, based on receiving of the first user input,
receive a second user input for one thumbnail in the video list, and
play a video corresponding to the one thumbnail through the display, based on receiving of the second user input.

6. The electronic device of any one of claims 1 to 5, wherein the instructions, when executed by the processor individually or collectively, cause the electronic device to identify the event, based on one or more objects in the video.

7. The electronic device of any one of claims 1 to 6, wherein the instructions, when executed by the processor individually or collectively, cause the electronic device to:
estimate an action of the user, based on the sensing data; and
identify the event, based on the estimated action of the user.

8. The electronic device of any one of claims 1 to 7, wherein the memory stores a first software application,
wherein the first software application, when executed by the processor individually or collectively, cause the electronic device to:
store the video and the sensing data, generated in real time,
identify a first event, based on the video,
store a video corresponding to the first interval in which the first event was identified in the memory,
identify a second event, based on the sensing data, and
store sensing data corresponding to the second interval in which the second event was identified in the memory.

9. The electronic device of claim 8,
wherein the memory stores a second software application, and
wherein the second software application, when executed by the processor individually or collectively, cause the electronic device to:
generate a first description representing the video corresponding to the first interval based on the video corresponding to the first interval, and
generate the second description representing the sensing data corresponding to the second interval based on the sensing data corresponding to the second interval.

10. The electronic device of any one of claims 1 to 9, wherein the third-person perspective content includes an avatar corresponding to the user of the electronic device.

11. The electronic device of claim 10, wherein the avatar corresponding to the user of the electronic device includes an avatar based on an object corresponding to the user included in the content.

12. The electronic device of any one of claims 1 to 11, wherein the sensor includes at least one of a sensor configured to track the user's gaze, a sensor configured to obtain data related to the user's biometric information, a sensor configured to obtain data related to audio, or a sensor configured to obtain data related to the user's motion.

13. The electronic device of any one of claims 1 to 12, wherein the instructions, when executed by the processor individually or collectively, cause the electronic device to generate third-person perspective content corresponding to first-person perspective content received from an external electronic device, using the generative artificial intelligence model.

14. The electronic device of any one of claims 1 to 13,
wherein the electronic device includes a head mounted display (HMD) device, and
wherein the instructions, when executed by the processor individually or collectively, cause the HMD device to:
receive a user input to play the video through the display, in a first mode providing a composite image of an external environment;
change from the first mode to a second mode different from the first mode, based on receiving of the user input; and
play the video, through the display, in the second mode.

15. The electronic device of claim 14, wherein the instructions, when executed by the processor individually or collectively, cause the HMD device to:
receive a user input to change the video to a third-person perspective, while the video is playing;
extract a prompt to generate a third-person perspective video, based on receiving the user input to change the video to the third-person perspective;
generate the third-person perspective video, by inputting the prompt into the generative artificial intelligence model;
change the second mode to the first mode; and
play the third-person perspective video, in the first mode.
